(19) Europäisches Patentamt
European Patent Office
Office européen des brevets

(11) **EP 4 016 337 A1**

(12) **EUROPEAN PATENT APPLICATION**

(43) Date of publication:
**22.06.2022 Bulletin 2022/25**

(21) Application number: **21206676.5**

(22) Date of filing: **05.11.2021**

(51) International Patent Classification (IPC):
***G06F 17/11*** *(2006.01)*

(52) Cooperative Patent Classification (CPC):
**G06F 17/11**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.12.2020 JP 2020207842**

(71) Applicant: **FUJITSU LIMITED**
**Kawasaki-shi, Kanagawa 211-8588 (JP)**

(72) Inventor: **SHIMADA, Daichi**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **OPTIMIZATION APPARATUS, OPTIMIZATION PROGRAM, AND OPTIMIZATION METHOD**

(57) An optimization apparatus for an optimization problem that involves a plurality of variables each taking either a first value or a second value, the plurality of variables grouped into a plurality of groups, among which any given group is under a constraint that an exactly predetermined number of variables among variables belonging to the given group take the second value, the optimization apparatus performing optimization computation with respect to first variables among variables belonging to selected groups selected from the plurality of groups so as to obtain an approximate solution satisfying the constraint, and estimating and removing, based on the approximate solution, variables that are unlikely to take the second value in an optimal solution, thereby leaving second variables to remain in each selected group, wherein optimization computation is newly performed after updating the first variables with the second variables and third variables belonging to at least one unselected group.

FIG.2

**Description**

FIELD

The disclosures herein relate to an optimization apparatus, an optimization program, and ab optimization method

BACKGROUND

Optimization apparatuses has a limit to the amount of data that can be loaded thereinto, and, thus, may not be able to solve a large-scale problem. In some cases, the hardware configuration of optimization apparatuses determines the amount of data that can be loaded. In other cases, limitations of the memory capacity and memory usage efficiency of optimization apparatuses restrict the amount of data that can be processed without dropping efficiency in a practical sense.

Various techniques may be devised in order to solve an optimization problem of a larger scale than the amount of data that can be loaded. Simple techniques, however, may result in an increase in the amount of computation, or may fail to provide an optimal solution or a satisfactory approximate solution.

Accordingly, there may be a need for an optimization technique that can provide an optimal solution or a satisfactory approximate solution when handling a problem whose size exceeds the predetermined amount of input data in an optimization apparatus.

[Related-Art Documents]

[Patent Document]

[Patent Document 1] Japanese Laid-open Patent Publication No. 2020-4387
[Patent Document 2] Japanese Laid-open Patent Publication No. 2020-64535
[Patent Document 3] Japanese Laid-open Patent Publication No. 2020-4384

SUMMARY

According to an aspect of the embodiment, an optimization apparatus for obtaining an approximate solution by performing optimization computation with respect to an optimization problem that involves a plurality of variables each taking either a first value or a second value, the plurality of variables grouped into a plurality of groups, among which any given group is under a constraint that an exactly predetermined number of variables among variables belonging to the given group take the second value, the optimization apparatus including a memory and one or more processors coupled to the memory and configured to perform performing optimization computation with respect to first variables subjected to optimization computation among variables belonging to one or more selected groups selected from the plurality of groups so as to obtain an approximate solution satisfying the constraint, and estimating and removing, based on the approximate solution, variables that are unlikely to take the second value in an optimal solution, thereby leaving second variables to remain in each of the one or more selected groups, wherein optimization computation is newly performed after updating the first variables with the second variables and third variables belonging to at least one unselected group, thereby repeatedly performing optimization computation by newly including, for each optimization computation, variables belonging to one or more previously unselected groups.

BRIEF DESCRIPTION OF DRAWINGS

Fig. 1 is a drawing illustrating an example of the configuration of an optimization apparatus;
Fig. 2 is a drawing illustrating an example of the functional configuration of the optimization apparatus;
Fig. 3 is a schematic drawing illustrating an example of an optimization problem;
Fig. 4 is a schematic drawing illustrating another example of an optimization problem;
Fig. 5 is a drawing illustrating variables subjected to optimization computation performed by an optimization computation unit;
Fig. 6 is a flowchart illustrating an example of an optimization method performed by the optimization apparatus;
Fig. 7 is a drawing illustrating an example of the method of calculating the likelihood of occurrence of constraint violation;

Fig. 8 is a drawing illustrating another example of the method of calculating the likelihood of occurrence of constraint violation;

Fig. 9 is a drawing illustrating another example of the method of calculating the likelihood of occurrence of constraint violation;

Fig. 10 is a drawing illustrating another example of the method of calculating the likelihood of occurrence of constraint violation.

Fig. 11 is a drawing for explaining the addition of optimization target variables;

Fig. 12 is a drawing illustrating a process of reducing the number of elements of a matrix;

Fig. 13 is a drawing illustrating an example of a process of estimating variables whose values are unlikely to be 1 in the optimal solution;

Fig. 14 is a flowchart illustrating an example of the process of excluding variables described in Fig. 13;

Fig. 15 is a drawing illustrating another example of the process of estimating variables whose values are unlikely to be 1 in the optimal solution; and

Fig. 16 is a flowchart illustrating an example of the process of excluding variables described in Fig. 15.

DESCRIPTION OF EMBODIMENTS

The technology of the present disclosures is directed to a problem in which a total number of variables belonging to a plurality of groups exceeds a predetermined data amount where each of the plurality of groups is under the constraint that, among variables assuming either a first value or a second value, an exactly predetermined number of variables assume the second value. An approximate solution to this problem is then obtained by performing optimization computation with respect to no more the predetermined amount of data. This optimization computation may be the one which uses a general-purpose approximation algorithm (i.e., metaheuristic algorithm) based on a heuristic approach to obtain a good approximate solution within a practically feasible computational time. The above-noted predetermined number may differ from group to group.

In formulating the problem of the present disclosures, variables $x_i$ (i=1 to n) each assuming a value of 0 or 1 are used to describe the technique of the present disclosures. A notation is used such that x without a subscript represents the following column vector.

$$X = (X_1, \ X_2, \ X_3, \ \ldots, \ X_n)^T \qquad (1)$$

Here, T represents transposition. An objective function E to be minimized in the optimization computation may then be expressed by the following equation.

$$E = x^T A x \qquad (2)$$

Here, A is a two-dimensional matrix of n×n elements, which are represented by $a_{ij}$ (i=1 to n, j=1 to n). This expression (2) is equivalent to an expression representing an Ising model, and corresponds to the QUBO (quadratic unconstrained binary optimization) expression obtained by replacing variables having a value of -1 or 1 in the Ising model with variables having a value of 0 or 1. In the case in which the variables are generalized as taking either a first value or a second value, the expression (2) representing the objective function will be modified and have a different shape. However, these expressions are equivalent to each other between the case in which variables take a value of 0 or 1 and the case in which variables take the first value or the second value.

The n-Hot condition is a constraint condition in which only n variables among the variables belonging to the set of interest are equal to 1, with all the other variables being equal to 0. That is, the constraint condition requires that the number of variables assuming a value of 1 in the set of interest be exactly n. For example, the 1-Hot condition requires that the number of variables taking a value of 1 in the set of interest is exactly one, and the 2-Hot condition requires that the number of variables taking a value of 1 in the set of interest is exactly two.

In the formulation of the problem of the present disclosures, a plurality of groups are defined, each required to satisfy the n-Hot condition. For example, the total number n of variables may be 10, with $x_1$ through $x_5$ belonging to a first group, and $x_6$ through $x_{10}$ belonging to a second group. The first group may be required to satisfy the 1-Hot condition, and the second group may be required to satisfy the 2-Hot condition. Specific examples in which n-Hot conditions are given to respective groups as noted above will be described later.

In the formulation of the problem of the present disclosures, the amount of data input into optimization computation is less than or equal to a predetermined amount of data. Namely, optimization computation is not performed with respect to greater than the predetermined amount of data, and is always performed with respect to no greater than the predetermined amount of data. In some cases, for example, the hardware configuration of optimization apparatuses determines the amount of data that can be loaded. In other cases, limitations of the memory capacity and memory usage efficiency of optimization apparatuses restrict the amount of data that can be processed without dropping efficiency in a practical sense. In some other cases, optimization apparatuses may be capable of performing optimization computation with respect to greater than the predetermined amount of input data, but the circumstances that place an emphasis on the preference for reduced consumption or the like may demand that optimization computation be performed with respect to no greater than the predetermined amount of input data.

For example, where the total number n of variables $x_i$ defining the problem is 10 and the number of variables corresponding to the predetermined amount of data is 8, a solution cannot directly be obtained with respect to the problem defined by $x_1$ to $x_{10}$. In the technique disclosed herein, the fact that an n-Hot condition is imposed on each group is utilized, and the variables estimated not to be 1 in an optimal solution in each group are disregarded (factored out) to reduce the number of variables subject to optimization computation.

For example, the situation may be such that the 1-Hot condition is imposed on variables $x_1$ through $x_5$ of the first group, and the 2-Hot condition is imposed on variables $x_6$ through $x_{10}$ of the second group. The first group may be estimated such that in an optimal solution, the variables taking a value of 1 is one of $x_1$ through $x_4$ and $x_5$ does not take a value of 1. In this case, $x_5$ may be fixed to 0 and excluded from optimization computation, and such a modification can still provide an optimal solution or a good approximate solution without problem. The second group may be estimated such that in an optimal solution, the variables taking a value of 1 is one of $x_5$ through $x_9$ and $x_{10}$ does not take a value of 1. In this case, $x_{10}$ may be fixed to 0 and excluded from optimization computation, and such a modification can still provide an optimal solution or a good approximate solution without problem.

Accordingly, an optimal solution or good approximate solution can successfully be obtained by performing optimization computation for no greater than the predetermined amount of input data (i.e., 8 variables), i.e., performing optimization computation with respect to 8 variables in total, i.e., $x_1$ to $x_4$ and $x_5$ to xg. Moreover, since efficient optimization computation is realized by reducing the number of variables subjected to optimization computation, an optimal solution or good approximate solution can efficiently be obtained.

In the following, embodiments will be described with reference to the accompanying drawings.

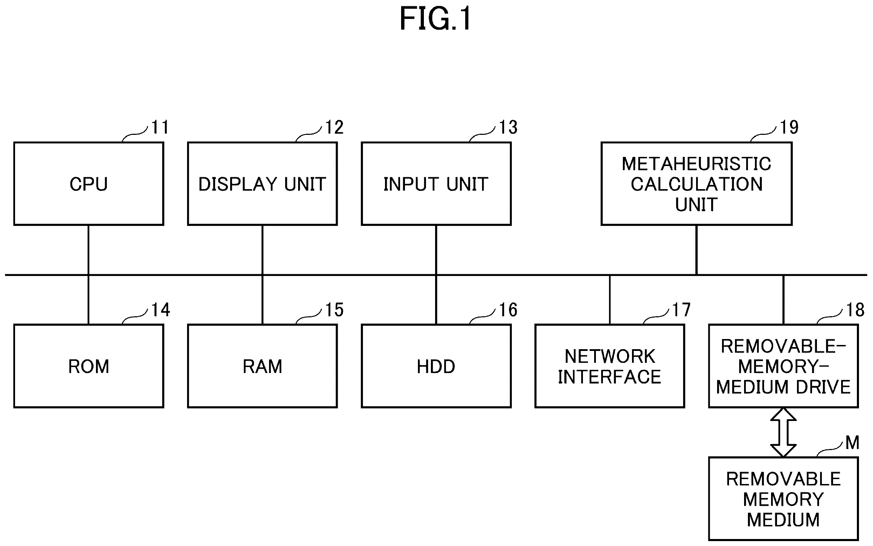

Fig. 1 is a drawing illustrating an example of the hardware configuration of an optimization apparatus. The optimization apparatus illustrated in Fig. 1 includes a CPU 11, a display unit 12, an input unit 13, a ROM 14, a RAM 15, an HDD 16, a network interface 17, a removable-memory-medium drive 18, and a metaheuristic calculation unit 19.

The input unit 13 provides user interface, and receives various commands for operating the optimization apparatus and user responses responding to data requests or the like. The display unit 12 displays the results of processing by the optimization apparatus, and further displays various data that make it possible for a user to communicate with the optimization apparatus. The network interface 17 is used to communicates with peripheral devices and with remote locations.

The optimization apparatus illustrated in Fig. 1 is a computer, and the optimization method is provided as a computer program executable by the optimization apparatus. This computer program is stored in a memory medium M that is mountable to the removable-memory-medium drive 18. The computer program is loaded to the RAM 15 or to the HDD 16 from the memory medium M through the removable-memory-medium drive 18. Alternatively, the computer program may be stored in a memory medium (not shown) provided in a peripheral apparatus or at a remote location, and is loaded to the RAM 15 or to the HDD 16 from the memory medium through the network interface 17.

Upon receiving user instruction for program execution from the input unit 13, the CPU 11 loads the program to the RAM 15 from the memory medium M, the peripheral apparatus, the remote memory medium, or the HDD 16. The CPU 11 executes the program loaded to the RAM 15 by use of an available memory space of the RAM 15 as a work area, and continues processing while communicating with the user as such a need arises. The ROM 14 stores control programs for the purpose of controlling basic operations of the optimization apparatus.

By executing the computer program as described above, the optimization apparatus performs the function to obtain an approximate solution to the problem. The metaheuristic calculation unit 19 may be a dedicated hardware (i.e., dedicated processor) specifically designed to execute a metaheuristic algorithm, and may be a dedicated hardware that performs simulated annealing to search for a solution of an Ising problem. In an alternative configuration, the metaheuristic calculation unit 19 may not be provided. In such a case, the CPU 11, which is the processor of the general-purpose computer, functions as a metaheuristic calculation unit to perform a metaheuristic algorithm. The metaheuristic algorithm may be simulated annealing, a random walk search algorithm, a genetic algorithm, a stochastic evolution algorithm, taboo search, or the like. It suffices for a metaheuristic algorithm to search in a heuristic manner for a solution (i.e., approximate solution) approximate to the solution that minimizes an objective function.

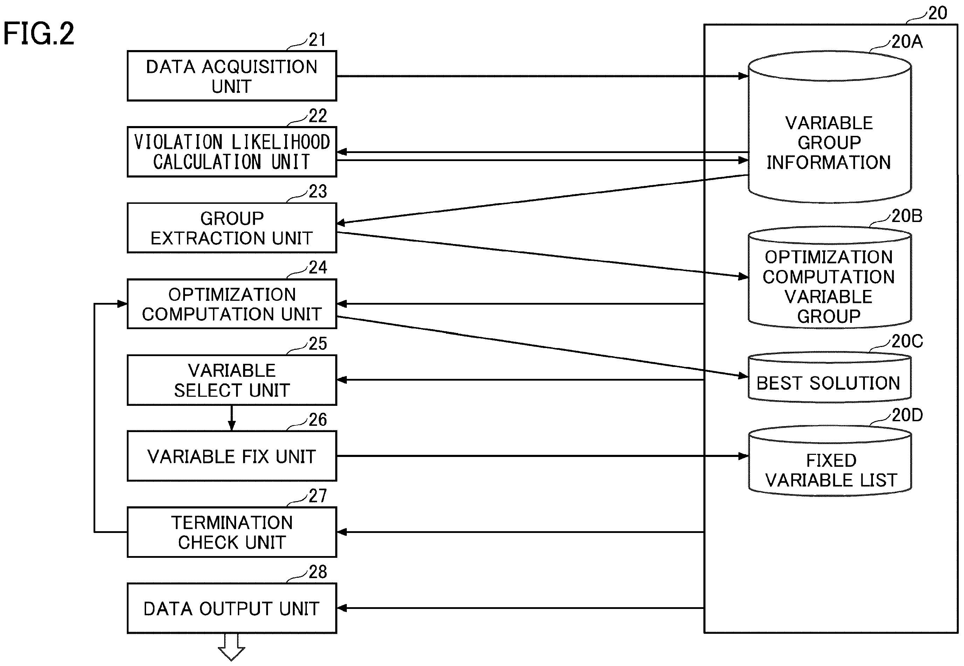

Fig. 2 is a drawing illustrating an example of the functional configuration of the optimization apparatus. The optimization apparatus illustrated in Fig. 2 includes a data storage unit 20, a data acquisition unit 21, a violation likelihood calculation unit 22, a group extraction unit 23, an optimization computation unit 24, a variable select unit 25, a variable fix unit 26, a termination check unit 27, and a data output unit 28.

The functional units other than the data storage unit 20 and the optimization computation unit 24 may be implemented by the CPU 11 illustrated in Fig. 1. The function of the data storage unit 20 may be implemented by the RAM 15 or the HDD 16 illustrated in Fig. 1. The function of the optimization computation unit 24 may be implemented by the CPU 11 or the metaheuristic calculation unit 19 illustrated in Fig. 1.

It may be noted that boundaries between functional blocks illustrated as boxes indicate functional boundaries, and may not necessarily correspond to boundaries between program modules or separation in terms of control logic. One functional block and another functional block may be combined into one functional block that functions as one block. One functional block may be divided into a plurality of functional blocks that operate in coordination.

The data storage unit 20 stores variable group information 20A, an optimization computation variable group 20B, the best solution 20C, and a fixed variable list 20D.

The data acquisition unit 21 receives data defining an optimization problem from an external source, and stores the data in the data storage unit 20 as the variable group information 20A. Variables specified in the optimization problem, information about the grouping of variables, an n-Hot condition specified for each group, etc. may be stored as the variable group information 20A. In addition, the values of a matrix A defining an objective function including the terms concerning various constraints may be stored in the data storage unit 20 as part of the variable group information 20A.

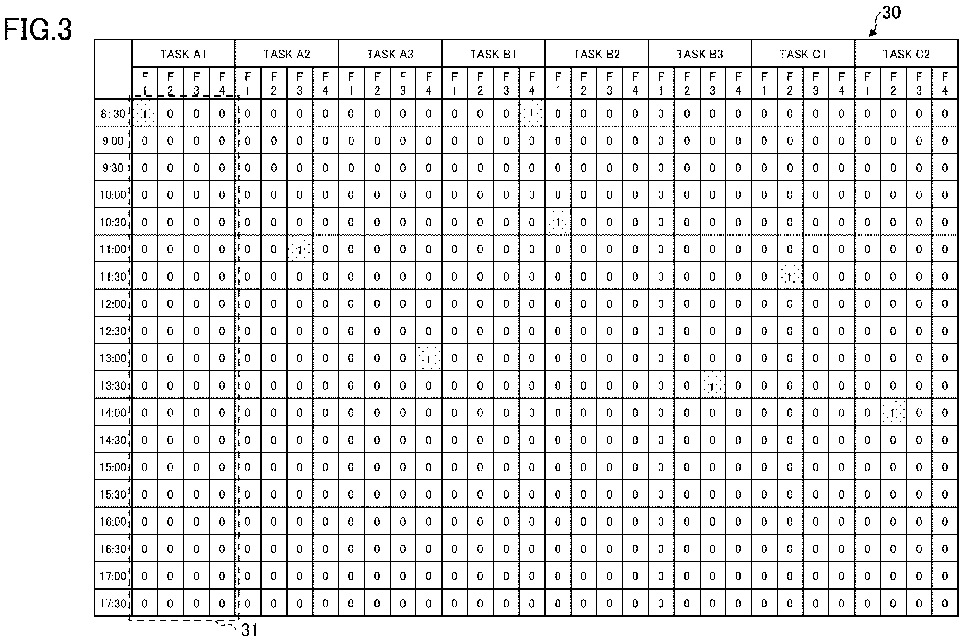

Fig. 3 is a schematic drawing illustrating an example of an optimization problem. An optimization problem to be solved by the optimization apparatus illustrated in Fig. 2 may be, for example, a resource-constrained project scheduling problem. The resource-constrained project scheduling problem concerns a situation in which constrains are imposed on a plurality of tasks and a plurality of resources, and requires the plurality of resources to be allocated to the plurality of tasks while satisfying the constraints such that the duration of the project is shorter than a target optimization period. In order for the optimization computation unit 24 illustrated in Fig. 2 to function as an Ising machine to perform an optimization process formulated as an Ising model, the resource-constrained project scheduling problem is formulated as a binary-variable-based model, on which an optimization process is performed.

In a table 30 illustrated in Fig. 3, tasks #1 to #3 for a product A are indicated as tasks A1 to A3, respectively. Tasks #1 to #3 for a product B are indicated as tasks B1 to B3, respectively. Tasks #1 and #2 for a product C are indicated as tasks C1 and C2, respectively. Each row of the table illustrated in the table 30 represents time (by time slots in units of 30 minutes), and each column represents a combination between a task and a facility.

In order to formulate a binary-variable-based model of the resource-constrained project scheduling problem illustrated in Fig. 3, binary variables $x_{jmt}$ may be defined. The subscript j represents a task, the subscript m representing a resource, and the subscript t representing time. The time period from 8:30 to 18:00 is divided into 19 time slots each having a duration of 30 minutes, and a specific time slot can be specified by assigning a number from 1 to 19 to the subscript t indicative of time. For example, a column of "F1" belonging to "task A1" shows a value, at a time t, of a variable $x_{11t}$ which defines the fact that the task #1 for the product A is allocated to a facility 1. In this manner, each cell in the table 30 illustrated in Fig. 3 corresponds to a respective one of the binary variables $x_{jmt}$.

For example, a binary variable $x_{111}$ represents the state of the task #1 for the product A at time 8:30 at the facility 1. The fact that the value of this binary variable $x_{111}$ is 1 indicates the fact that the task #1 for the product A starts at 8:30 at the facility 1. As illustrated in Fig. 3, the value of $x_{11t}$ assumes "1" only in the time slot corresponding to time 8:30 (i.e., $x_{111}$=1), and assumes "0" in any other time slots. In the table 30, the cells for which the value of the binary variable $x_{jmt}$ is 1 to indicate that the task j begins at time t at the facility m are illustrated in dot shading.

In resource-constrained project scheduling problems, there is a constraint that each task is performed only once. For example, the task #1 for the product A is performed only once at only one of the facilities between 8:30 and 18:00. Accordingly, when a group 31 is formed by the binary variables $x_{jmt}$ representing the task A1 as illustrated in Fig. 3, the group 31 has a 1-Hot condition imposed thereon as a constraint. Namely, only one of the binary variables $x_{jmt}$ belonging to the group 31 has a value of 1, and all the remaining variables have a value of 0.

The same applies to all the other tasks A2, A3, B1, B2, B3, C1 and C2. Accordingly, the binary variables $x_{jmt}$ defining the resource-constrained project scheduling problem illustrated in Fig. 3 are divided into eight groups corresponding to the tasks A1, A2, A3, B1, B2, B3, C1, and C2, respectively, and each group is subject to the 1-Hot condition serving as a constraint.

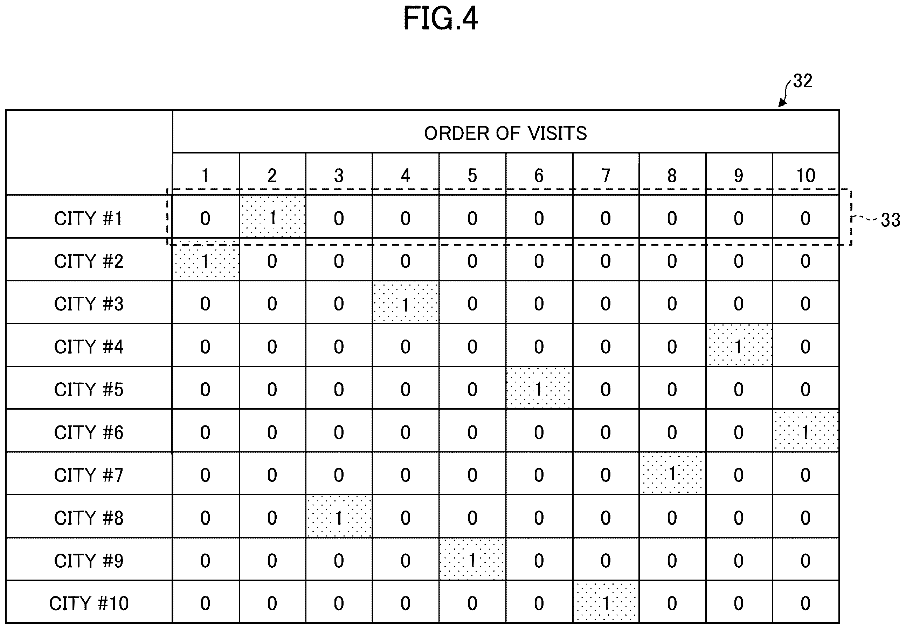

Fig. 4 is a schematic drawing illustrating another example of an optimization problem. An optimization problem to be solved by the optimization apparatus illustrated in Fig. 2 may be, for example, a traveling salesman problem. In the traveling salesman problem, a route having the smallest total cost (e.g., total travel distance) is selected among the routes each of which visits each city exactly once and returns to the start point.

In a table 32 illustrated in FIG. 4, rows represent respective cities, and columns represent the order of visits. In order to formulate a binary-variable-based model of the traveling salesman problem illustrated in Fig. 4, binary variables $x_{jk}$ may be defined. The subscript j represents a city, and the subscript k represents an ordinal position in a visit sequence. Each cell in the table 32 illustrated in Fig. 4 corresponds to a respective one of the binary variables $x_{jk}$.

For example, when the city #1 is visited second, the value of the binary variable $x_{12}$ takes a value of 1. The

binary variables $x_{1k}$ representing the city #1 have a value of 0 for the ordinal positions in the visit sequence other than the second position (i.e., other than k=2). In the table 32, the cells for which the value of the binary variable $x_{jk}$ is 1 to indicate that the city #j is visited at the ordinal position k are illustrated in dot shading.

In the traveling salesman problems, there is a constraint that each city is visited only once. Namely, the city #1 is visited only at one ordinal position among the first ordinal position through the tenth ordinal position. Accordingly, when a group 33 is formed by the binary variables $x_{1k}$ representing the city #1 as illustrated in Fig. 4, the group 33 has a 1-Hot condition imposed thereon as a constraint. Namely, only one of the binary variables $x_{1k}$ belonging to the group 33 has a value of 1, and all the remaining variables have a value of 0.

The same applies to all the other cities #1 through #10. Accordingly, the binary variables $x_{jk}$ defining the traveling salesman problem illustrated in Fig. 4 are divided into ten groups corresponding to the cites #1 through #10, respectively, and each group is subject to the 1-Hot condition serving as a constraint.

In the following, computation performed by the optimization apparatus illustrated in Fig. 2 will be described with reference to an example in which a resource-constrained project scheduling problem is optimized by an Ising machine.

Referring to Fig. 2 again, the violation likelihood calculation unit 22 calculates the likelihood of occurrence of constraint violation for each of the plurality of groups indicated by the variable group information 20A. The likelihood of occurrence of constraint violation determined by the violation likelihood calculation unit 22 is stored, and associated with each of the plurality of groups, in the data storage unit 20 as the variable group information 20A. It may be noted that a constraint violation noted above is not the violation of an n-Hot condition, but the violation of other constraints.

In the case of a resource-constrained project scheduling problem, constrains may be imposed on resource usable time such that a given facility cannot be used to perform a task during the time period in which the facility is not usable. Further, as constrains on the order of tasks, constraints may be imposed such that tasks #1, #2, and #3 for a given product may need to be performed in the order named, without overlapping one another in time. Moreover, constraints may be imposed on correspondence between tasks and resources such as the requirement that a particular task can only be performed by a particular resource, and constraints may be imposed on the allowable start time and the required completion time of individual tasks. These constraints may be incorporated into the values of coefficients in the matrix A in formula (2) previously described, which represents the objective function.

The group extraction unit 23 sequentially extracts groups from the plurality of groups in the descending order of the likelihood of occurrence of constraint violation. Variables belonging to the groups extracted by the group extraction unit 23 are stored in the data storage unit 20 as the optimization computation variable group 20B.

The optimization computation unit 24 repeatedly performs optimization computation by successively including the variables belonging to the groups sequentially extracted by the group extraction unit 23, that is, the variables stored as the optimization computation variable group 20B. For example, optimization computation may be performed with respect to a group of variables belonging to first two groups. Some variables are then removed from this group of variables, and the variables belonging to the third group are newly added to the group of variables to create a variable group for optimization computation, followed by performing next optimization computation with respect to the variable group for optimization computation.

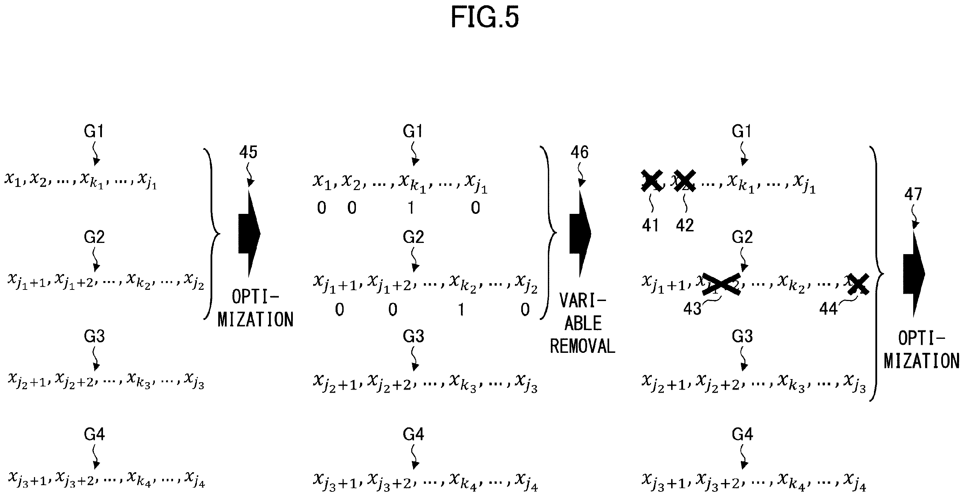

Fig. 5 is a drawing illustrating variables subjected to optimization computation performed by the optimization computation unit 24. In the example illustrated in Fig. 5, the optimization problem is divided into four groups G1 through G4. Variables belonging to each of the groups G1 through G4 are illustrated in Fig. 5. It may be noted that the binary variables $x_{jmt}$ used to explain the resource-constrained project scheduling problem illustrated in Fig. 3 have three subscripts, whereas binary variables $x_i$ illustrated in Fig. 5 has one subscript.

For example, in the first row of the table 30, $x_1$ to $x_4$ may be allocated to the four cells corresponding to the four columns "F1" (facility 1) to "F4" (facility 4) of "TASK A1", and, in the second row of the table 30, $x_5$ to $x_8$ may be allocated to the four cells corresponding to the four columns ""F1" (facility 1) to "F4" (facility 4) of "TASK A1". Similar allocation is made with respect to the third to nineteenth rows, so that variables $x_1$ through $x_{76}$ with consecutive subscripts may be allocated to the 76 cells in the 19 rows and 4 columns belonging to the group 31 in the table 30. Further, variables $x_{77}$ through $x_{152}$ may then be allocated similarly to a group corresponding to the task A2. In this manner, the binary variables $x_i$ with one subscript can be defined with respect to a plurality of groups as illustrated in Fig. 5.

Fig. 5 is illustrated such that the groups G1 through G4 are arranged in the descending order of likelihood of occurrence of constraint violation. That is, the group G1 has the highest likelihood of occurrence of constraint violation, and the group G4 has the lowest likelihood of occurrence of constraint violation. Consequently, the group extraction unit 23 extracts the groups in the sequence starting from the group G1. As was previously described, the likelihood of occurrence of constraint violation may be calculated by the violation likelihood calculation unit 22 illustrated in Fig. 2.

The group extraction unit 23 illustrated in Fig. 2 may first extract, for example, the group G1 and the group G2 from a set of groups (i.e., the set comprised of the groups G1 or G4), and may use the variables belonging to the group G1 and the group G2 as variables for optimization computation. Specifically, the group extraction unit 23 may store the variables belonging to the groups G1 and G2 in the data storage unit 20 as the optimization computation variable group 20B. For example, the group extraction unit 23 may have information regarding an upper limit of the number of variables, for example, that can be used in optimization computation by the optimization computation unit 24. The group extraction unit 23 may detect that the total number of variables belonging to the groups G1 and G2 does not exceed the upper limit and that the total number of variables belonging to the groups G1 through G3 exceeds the upper limit, followed by supplying the variables belonging to the groups G1 and G2 as the variables for optimization computation.

In other words, among the variables belonging to one or more selected groups G1 and G2 selected from the plurality of groups G1 through G4, the total number of first variables (i.e., all the variables belonging to the groups G1 and G2 in this case) subjected to optimization computation is less than or equal to the predetermined amount of data. Further, the sum of the first variables and second variables belonging to the one unselected group G3 is greater than the predetermined amount of data. Where these conditions are satisfied, the optimization computation unit 24 performs optimization computation 45 for the first variables (i.e., the variables belonging to the groups G1 and G2) as illustrated in Fig. 5 to obtain an approximate solution that satisfies n-Hot conditions. Specifically, the optimization computation unit 24 may perform the optimization computation 45 with respect to the variables stored in the optimization computation variable group 20B to obtain an approximate solution that satisfies the n-Hot conditions. In the example illustrated in Fig. 5, an approximate solution is obtained that satisfies the 1-Hot condition for group G1 and the 1-Hot condition for group G2.

The values of variables in the approximate solution obtained by the optimization computation unit 24 are indicated directly below the respective variables belonging to the groups G1 and G2 after the execution of the optimization computation 45 (i.e., to the right of the arrow indicating the optimization computation 45). In each of the groups G1 and G2, only one variable has a value of 1 and all the remaining variables have a value of 0 when the 1-Hot condition is imposed, for example.

Returning to Fig. 2, the approximate solution obtained by the optimization computation unit 24 is stored in the data storage unit 20 as the best solution 20C. Thereafter, the variable select unit 25 refers to the optimization computation variable group 20B and the best solution 20C to estimate the variables that are unlikely to be 1 in the optimal solution in each of the selected groups G1 and G2 based on the approximate solution (i.e., the best solution 20C), followed by excluding these variables from the optimization computation variable group 20B. Specifically, as illustrated in Fig. 5, variable removal 46 excludes (i.e., removes) variables 41 and 42 in the group G1 and variables 43 and 44 in the group G2. The variable fix unit 26 may store the above-noted excluded variables in the data storage unit 20 as the fixed variable list 20D that lists variables whose values are fixedly set to zero.

In performing the above-noted variable removal process, the variable select unit 25 may estimate variables that are unlikely to be 1 in the optimal solution by considering the n-Hot condition. Namely, a variable whose value is 1 in the obtained approximate solution is highly likely to be 1 also in the optimal solution, so that this variable should be left to remain. In contrast, there may be a variable corresponding to conditions that are significantly different from the conditions corresponding to the variable whose value is 1 in the approximate solution. It is highly unlikely for this variable to be 1 (i.e., will not likely be 1) in the optimal solution. For example, the approximate solution may indicate a condition that the task A1 starts at 9:00 in the early morning. In such a case, a condition that is significantly different from the indicated condition, such as a condition that the task A1 starts at 17:00 in the late evening, is highly unlikely to be included in the optimal solution. Accordingly, the variable corresponding to the time slot "17:00" of the task A1 can be removed based on the estimation that this variable is unlikely to be 1 in the optimal solution.

The variable select unit 25 leaves the third variables to remain such that the sum of the third variables left to remain (i.e., the variables remaining without being excluded among the variables belonging to the groups G1 and G2) and the second variables (i.e., variables belonging to the unselected group G3) is less than or equal to the predetermined amount of data.

Subsequently, as illustrated in Fig. 5, the optimization computation unit 24 perform new optimization computation 47 after updating the first variables (i.e., variables that are subjected to optimization computation) with the third variables and at least the second variables. Specifically, the group extraction unit 23 adds the variables belonging to the previously unselected group G3 to the optimization computation variable group 20B. The optimization computation unit 24 then performs optimization computation with respect to the variables remaining after excluding the variables stored in the fixed variable list 20D from the variables stored in the optimization computation variable group 20B. In this manner, the process of performing optimization computation is repeated while including the variables belonging to the previously unselected group G3.

In other words, among the variables belonging to one or more selected groups G1 through G3, the total number of first variables (i.e., the variables left to remain in the groups G1 and G2 and all the variables belonging to the group G3 in this case) subjected to optimization computation is less than or equal to the predetermined amount of data. Further, the sum of the first variables and second variables belonging to one unselected group G4 is greater than the predetermined amount of data. Under such conditions, the optimization computation unit 24 performs optimization computation 47 for the first variables (i.e., the variables left to remain in the groups G1 and G2 and all the variables belonging to the group G3) as illustrated in Fig. 5 to obtain an approximate solution that satisfies n-Hot conditions.

In this manner, the optimization computation unit 24 repeatedly performs optimization computation while successively including the variables belonging to one or more previously unselected groups. Namely, optimization computation is first performed with respect to the selected groups G1 and G2, followed by performing optimization computation upon including the previously unselected group G3, and then performing optimization computation upon including the previously unselected group G4. This arrangement allows an approximate solution to be obtained with respect to the groups G1 to G4 as a whole.

In performing a series of optimization computations as described above, the n-Hot conditions are utilized to exclude, from each group based on approximate solutions, the variables that are unlikely to be 1 in the optimal solution. In other words, rather than randomly excluding variables, an approximate solution actually obtained by optimization computation is used as a basis to estimate and exclude variables that will not contribute to the optimal solution. Because of this, an optimal solution or good approximate solution can be successfully obtained despite reducing the number of variables used in optimization computation. Moreover, since efficient optimization computation is realized by reducing the number of variables subjected to optimization computation, an optimal solution or good approximate solution can efficiently be obtained with respect to a large-scale problem.

Moreover, as previously described, the violation likelihood calculation unit 22 may calculate the likelihood of occurrence of constraint violation for each group, and the group extraction unit 23 may select groups for optimization computation in the descending order of likelihood of occurrence of constraint violation. With this arrangement, groups for which constraints are difficult to satisfy are preferentially subjected to optimization computations ahead of groups for which constraints are easy to satisfy. If a group for which constraints were difficult to satisfy was given low priority, the constraints would not be satisfied in the end, or only a low-quality approximate solution would possibly be obtained upon attempting to satisfy the constraints. The optimization apparatus illustrated in Fig. 2 gives priority to groups for which constraints are difficult to satisfy, thereby efficiently obtaining a good approximation solution that is closer to the optimal solution.

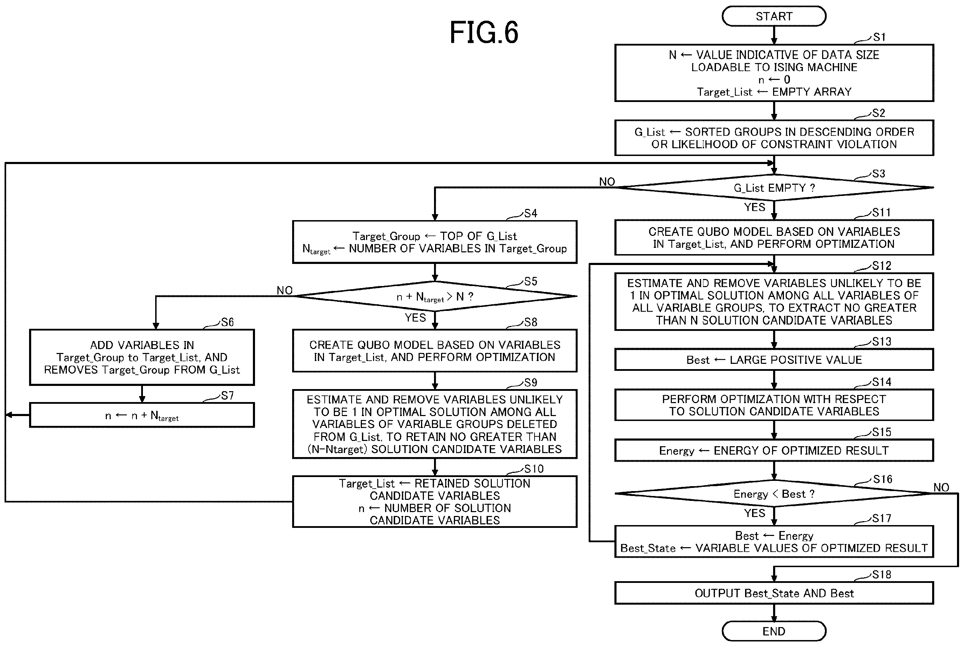

Fig. 6 is a flowchart illustrating an example of the optimization method performed by the optimization apparatus; The approximation method illustrated in Fig. 6 may be performed by the function units illustrated in Fig. 2 by use of the hardware illustrated in Fig. 1.

It may be noted that, in Fig. 6 and the subsequent flowcharts, an order in which the steps illustrated in the flowchart are performed is only an example. The scope of the disclosed technology is not limited to the disclosed order. For example, a description may explain that an A step is performed before a B step is performed. Despite such a description, it may be physically and logically possible to perform the B step before the A step while it is possible to perform the A step before the B step. In such a case, all the consequences that affect the outcomes of the flowchart may be the same regardless of which step is performed first. It then follows that, for the purposes of the disclosed technology, it is apparent that the B step can be performed before the A step is performed. Despite the explanation that the A step is performed before the B step, such a description is not intended to place the obvious case as described above outside the scope of the disclosed technology. Such an obvious case inevitably falls within the scope of the technology intended by this disclosure.

In step S1, the group extraction unit 23 sets N to a value indicative of the size of data loadable to the Ising machine (i.e., the predetermined amount of data for the optimization apparatus). The group extraction unit 23 also initializes a data quantity variable n and an optimization target variable list Target_List to zero. The optimization target variable list Target_List corresponds to the optimization computation variable group 20B illustrated in Fig. 2.

In step S2, the violation likelihood calculation unit 22 estimates the likelihood of occurrence of constraint violation for each variable group from the coefficients of a QUBO model, and, then, sorts the groups in the descending order of likelihood, followed by storing the sorted result in G_List. Namely, the violation likelihood calculation unit 22 calculates the likelihood of occurrence of constraint violation based on the coefficient values that are the elements of the matrix A of the objective function given in the previously-described formula (2), and arranges the groups in the order of likelihood such that the group most likely to violate constraints is placed first.

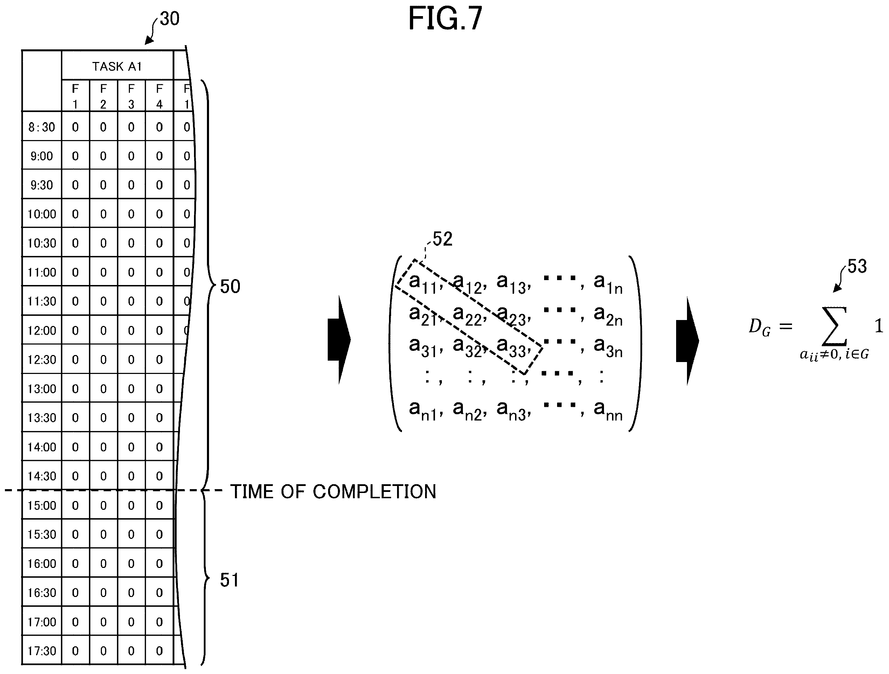

Fig. 7 is a drawing illustrating an example of the method of calculating the likelihood of occurrence of constraint violation. The left end of Fig. 7 illustrates the portion of the table 30 illustrated in Fig. 3 which portion relates to the task A1. The time of completion for the task A1 (i.e., the time by which the task A1 should be completed) is set at 15:00 as illustrated in Fig. 7. In this case, the values of variables $x_i$ are allowed to be 1 in a time period 50 before the time of completion, but are not allowed to be 1 in a time period 51 after the time of completion. Accordingly, for the variables $x_i$ in the time period 51 after the time of completion, large values are set to the coefficients $a_{ii}$ (i.e., diagonal elements of the matrix A), which relate to the square of the variables $x_i$ in the aforementioned formula (2) of the objective function. This arrangement achieves an objective function in which penalty increases when the time of completion is delayed. As described above, the coefficients $a_{ii}$ relating to the square of the variables $x_i$ (i.e., the diagonal elements of the matrix A) serve to provide penalty when the variables $x_i$ take a value of 1. In consideration of this, the likelihood of occurrence of constraint violation is estimated to be high when a large number of coefficients are non-zero among these diagonal-element coefficients.

The matrix illustrated in Fig. 7 is the matrix A illustrated in formula (2) of the objective function. Diagonal elements 52 of this matrix are the diagonal elements that belong to the group corresponding to the task A1 among all the diagonal elements (i.e., diagonal elements for all the tasks). Based on the reasoning described above, the number of non-zero coefficients among the diagonal elements 52 belonging to the group corresponding to the task A1 can be used as the likelihood of occurrence of constraint violation for this group. A formula 53 for calculating such likelihood of occurrence of constraint violation is illustrated in Fig. 7.

In the manner described above, the violation likelihood calculation unit 22 calculates the likelihood of occurrence of constraint violation for the group of interest among the plurality of groups. The likelihood of occurrence of constraint violation increases as the number of non-zero coefficients increases among the coefficients that relate to the square term of the variables belonging to the group of interest and that are included in the formula of the objective function used in optimization computation. Calculating the likelihood of occurrence of constraint violation in this manner allows the likelihood of occurrence of constraint violation to be reliably obtained for each group by simple calculation.

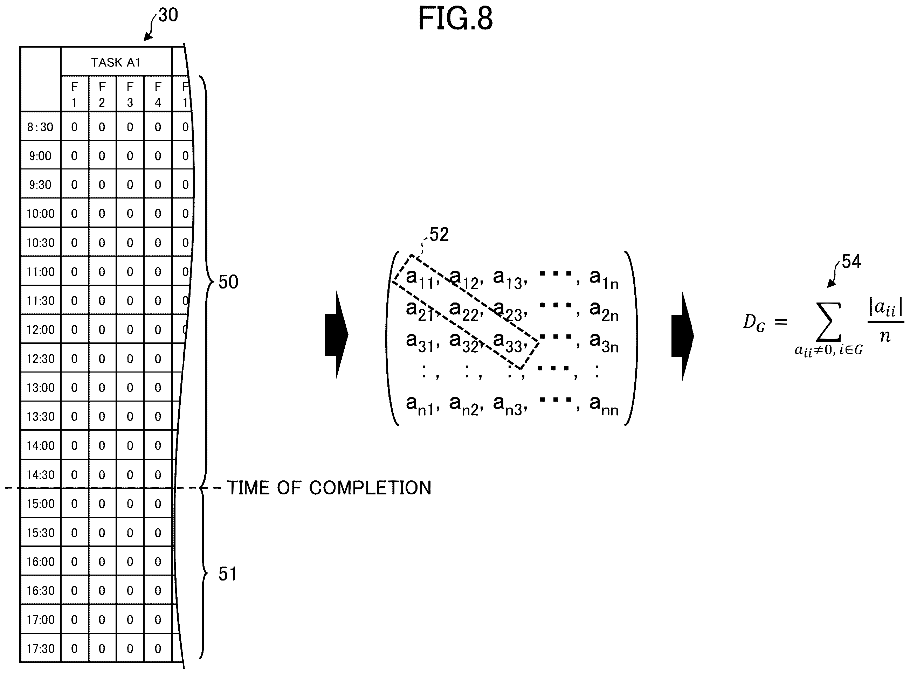

Fig. 8 is a drawing illustrating another example of the method of calculating the likelihood of occurrence of constraint violation. The method of calculating the likelihood of occurrence of constraint violation illustrated in Fig. 8 resembles the calculation method illustrated in Fig. 7. Namely, non-zero coefficients among the diagonal elements 52 belonging to the group corresponding to the task A1 are used as a basis to calculate the likelihood of occurrence of constraint violation for this group. It may be noted that while the method illustrated in Fig. 7 uses the number of non-zero coefficients among the diagonal elements 52 as the likelihood of occurrence of constraint violation, the method illustrated in Fig. 8 uses the average value of non-zero coefficients among the diagonal elements 52 as the likelihood of occurrence of constraint violation. A formula 54 for calculating such likelihood of occurrence of constraint violation is illustrated in Fig. 8.

In the manner described above, the violation likelihood calculation unit 22 calculates the likelihood of occurrence of constraint violation for the group of interest among the plurality of groups. The likelihood of occurrence of constraint violation increases as the average value of non-zero coefficients increases among the coefficients that relate to the square term of the variables belonging to the group of interest and that are included in the formula of the objective function used in optimization computation. Calculating the likelihood of occurrence of constraint violation in this manner allows the likelihood of occurrence of constraint violation to be reliably obtained for each group by simple calculation.

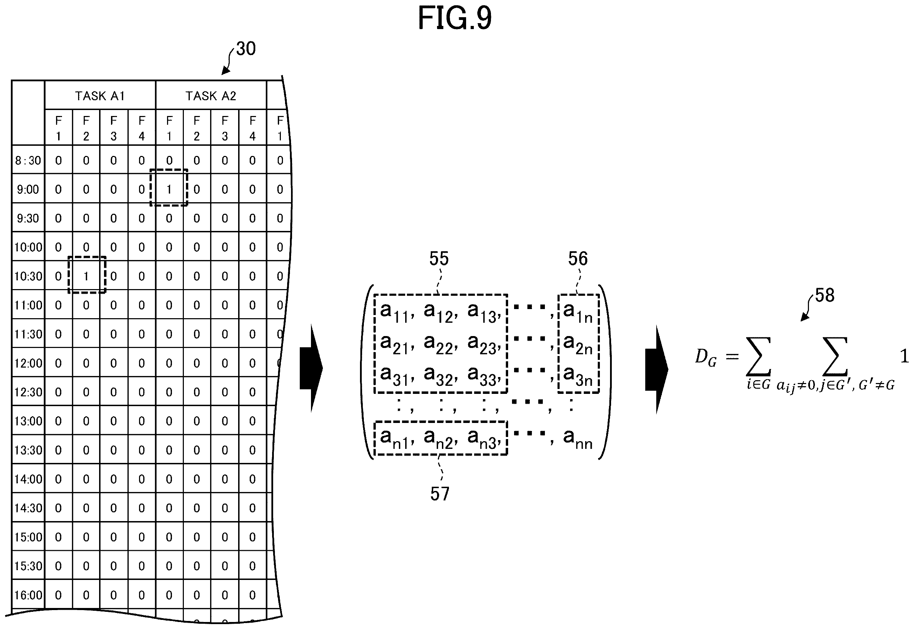

Fig. 9 is a drawing illustrating another example of the method of calculating the likelihood of occurrence of constraint violation. The left end of Fig. 9 illustrates the portion of the table 30 illustrated in Fig. 3 which portion relates to the task A1 and the task A2. In this example, there are restrictions on the order in which the task A1 and the task A2 are performed. The situation in this example is such that the task A2 can be started only after the task A1 is completed. In the example illustrated in Fig. 9, however, the variable value at the 10:30 time slot of "F2" (facility 2) of the task A1 is 1, and the variable value at the 9:00 time slot of "F1" of the task A2 is also 1, as indicated by the dotted-line boxes in the table 30. That is, the task A2 is started before completing the task A1 in this example.

Violation of the order of tasks as described above is not allowed, so that a large value is set to any coefficient of the term that is the product of variables corresponding to the two cells indicated by the two dotted-line boxes in the table 30 illustrated in Fig. 5. This arrangement achieves an objective function in which penalty increases when the order of tasks is not respected. As described above, the coefficient of the product of two variables belonging to two respective groups provides penalty when these two variables take a value of 1 at the same time. In consideration of this, the likelihood of occurrence of constraint violation is estimated to be high when a large number of coefficients are non-zero among such coefficients.

The matrix illustrated in Fig. 9 is the matrix A illustrated in formula (2) of the objective function. An element group 55 of this matrix is comprised of the coefficients of terms each relating to two variables belonging to the group corresponding to the task A1 and the coefficients of terms relating to the square of these variables. Element groups 56 and 57 of this matrix are comprised of the coefficients of terms each relating to the product of a variable belonging to the group corresponding to the task A1 and a variable belonging to the group corresponding to another task. Based on the reasoning described above, the number of non-zero coefficients among those belonging to the element groups 56 and 57 can be used as the likelihood of occurrence of constraint violation for the group corresponding to the task A1. A formula 58 for calculating such likelihood of occurrence of constraint violation is illustrated in Fig. 9.

In the manner described above, the violation likelihood calculation unit 22 calculates the likelihood of occurrence of constraint violation for the group of interest among the plurality of groups. First coefficients in the objective function formula used for optimization computation are each multiplied with the respective product of a variable belonging to the group of interest and a variable belonging to a group other than the group of interest among the plurality of groups. In such a case, the greater the number of non-zero coefficients among the first coefficients is, the greater the likelihood of occurrence of constraint violation is. Calculating the likelihood of occurrence of constraint violation in this manner allows the likelihood of occurrence of constraint violation to be reliably obtained for each group by simple calculation.

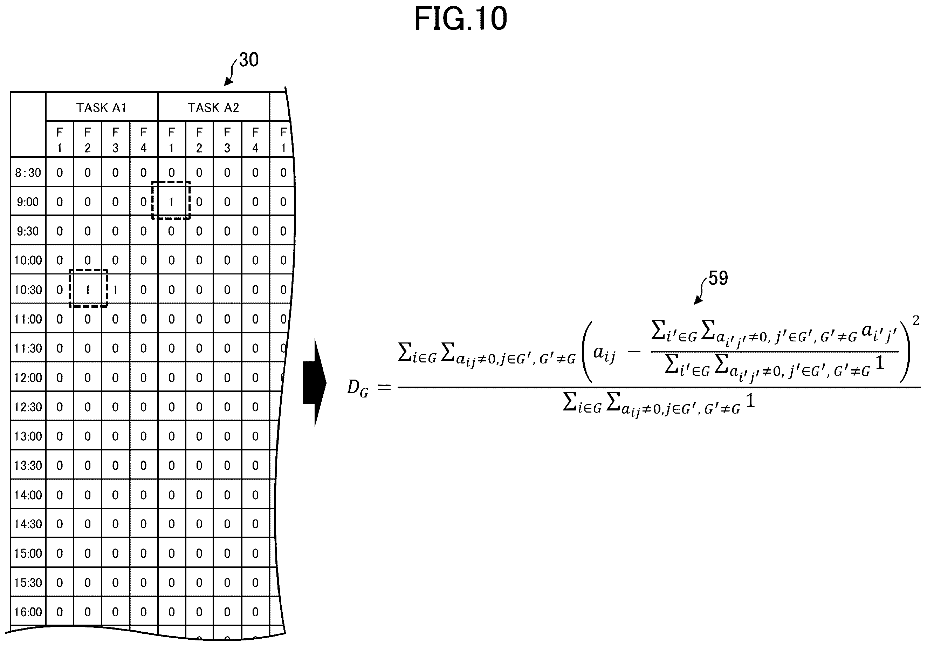

Fig. 10 is a drawing illustrating another example of the method of calculating the likelihood of occurrence of constraint violation. The calculation method illustrated in Fig. 10 resembles the calculation method illustrated in Fig. 9. Namely, coefficients of the terms each relating to the respective product of a variable belonging to the group of interest corresponding to the task A1 and a variable belonging to a group corresponding to another task are used as a basis to calculate the likelihood of occurrence of constraint violation for the group of interest. It may be noted that while the method illustrated in Fig. 9 uses the number of non-zero coefficients as the likelihood of occurrence of constraint violation, the method illustrated in Fig. 10 uses the variance of non-zero coefficients as the likelihood of occurrence of constraint violation. A formula 59 for calculating such likelihood of occurrence of constraint violation is illustrated in Fig. 10.

In the case in which the coefficients of products between two variables belonging to two respective groups include those having a large penalty value and those having a small penalty value, the variance of values of the coefficients tends to be a great value. As in the example previously described, a large coefficient value may be set for the combinations of variables that violate the constraints on the order of tasks. When only a portion of the coefficients have a large value as in this case, the variance of coefficients tends to be a great value. Use of such variance allows a more appropriate likelihood of occurrence of constraint violation to be calculated.

In the manner described above, the violation likelihood calculation unit 22 calculates the likelihood of occurrence of constraint violation for the group of interest among the plurality of groups. First coefficients in the objective function formula used for optimization computation are each multiplied with the respective product of a variable belonging to the group of interest and a variable belonging to a group other than the group of interest. In such a case, the greater the variance of non-zero coefficients among the first coefficients is, the greater the likelihood of occurrence of constraint violation is. Calculating the likelihood of occurrence of constraint violation in this manner allows a more appropriate likelihood of occurrence of constraint violation to be obtained for each group by simple calculation.

It may be noted that the four methods of calculating the likelihood of occurrence of constraint violation illustrated in Fig. 7 through Fig. 10 are independent of each other. The violation likelihood calculation unit 22 may use any one of the methods selected in advance to calculate the likelihood of occurrence of constraint violation. Alternatively, the violation likelihood calculation unit 22 may refer to the plurality of likelihoods of occurrence of constraint violation calculated by two or more of the noted four methods, followed by arranging groups in the descending order of likelihood of occurrence of constraint violation. In doing so, the plurality of likelihoods of occurrence of constraint violation calculated by two or more of the noted four methods may be added together, after weighting with proper weighting factors, followed by arranging groups based on the summed values in the descending order of likelihood of occurrence of constraint violation.

Returning to the flowchart of Fig. 6, in step S3, the group extraction unit 23 determines whether G List is empty. Upon finding that G List is not empty (NO), the procedure proceeds to step S4. Upon finding that G_List is empty (YES), the procedure proceeds to step S11.

In step S4, the group extraction unit 23 obtains a group from the top of G_List, followed by designating the obtained group as Target_Group. The group extraction unit 23 further acquires the number of variables belonging to the group that is Target_Group, and stores this number of variables in $N_{target}$.

In step S5, the group extraction unit 23 determines whether the sum of $N_{target}$ and the data quantity variable n (i.e., the value indicative of the number of variables, with a zero initial value) is greater than the loadable size N. Upon finding that the sum is no greater than the loadable size N (NO), the procedure proceeds to step S6. Upon finding that the sum is greater than the loadable size N (YES), the procedure proceeds to step S8.

In step S6, the group extraction unit 23 adds the variables belonging to the group that is Target_Group to Target_List, and removes this group from G_List. For example, in the first-round execution of step S6 after the initial setting, the number of variables belonging to the group that is Target_Group is less than or equal to the loadable size N, so that the variables belonging to this group are added to the optimization target variable list Target_List. Together with this, this group is removed from the group list G_List in which groups are arranged according to the likelihood of occurrence of constraint violation.

In step S7, the group extraction unit 23 adds $N_{target}$, which is the number of variables that are newly selected as variables for optimization, to the data quantity variable n, followed by designating the resultant value of addition as a new value of the data quantity variable n. The procedure thereafter returns to step S3.

By repeating the above-described steps S3 to S7, the group extraction unit 23 sequentially selects groups in the descending order of the likelihood of occurrence of constraint violation, and adds the variables belonging to these groups to the optimization target variable list Target_List. This process is repeatedly performed until the number of variables stored in the optimization target variable list Target_List becomes a maximum value less than or equal to the loadable size N, i.e. until no more variables belonging to a new group can be added. In the case in which no more variables belonging to a new group can be added to Target_List (i.e., YES in step S5), the procedure proceeds to step S8.

When the processes described above result in the state in which the result of check in step S5 is YES for the first time after the initial setting, all variables belonging to two groups, for example, retrieved from the top of G_List are stored in Target_List. With respect to these stored variables, optimization computation is performed by the optimization computation unit 24 as will be described later.

In the state in which the result of check in step S5 is YES immediately after performing the above-noted optimization computation, Target_List has stored therein the variables remaining after removing some variables from the variables belonging to the above-noted two groups and all the variables belonging to the group stored next in the group sequence in G_List. With respect to these stored variables, optimization computation is performed by the optimization computation unit 24 as will be described later.

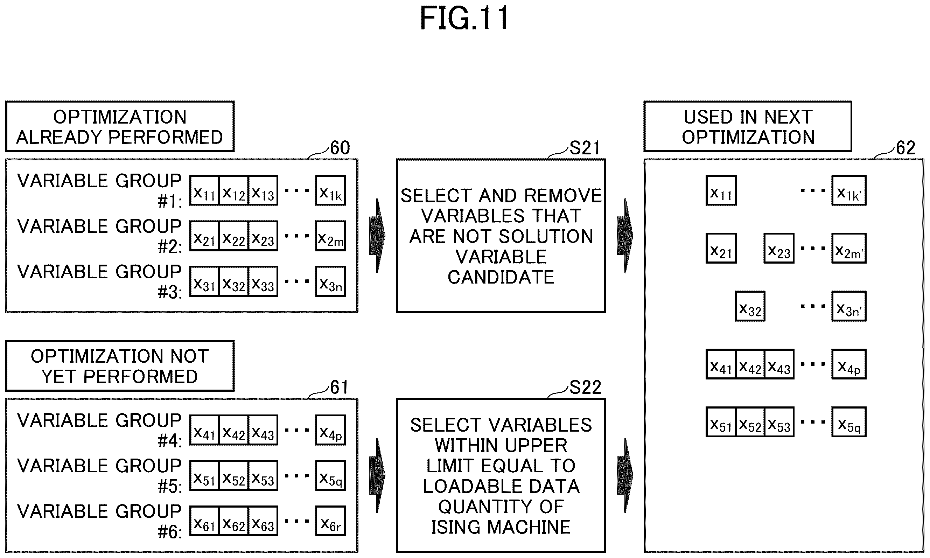

Fig. 11 is a drawing for explaining the addition of optimization target variables. The example in Fig. 11 illustrates, at the left end thereof, a state 60 in which optimization computation has already been performed with respect to groups #1 to #3, and a state 61 in which optimization computation has not been performed with respect to groups #4 to #6.

In the variable removal process previously described, the groups #1 to #3 for which optimization computation has already been performed are subjected to a process S21 that selects and removes variables that are not the candidates to constitute a solution. As a result, variables $x_{12}$ and $x_{13}$ belonging to the group #1, $x_{22}$ belonging to the group #2, $x_{31}$ and $x_{33}$ belonging to the group #3, and the like are removed.

The number obtained by subtracting the number of variables remaining after the above-noted removal of variables from the loadable size (i.e., the number of variables usable for optimization computation) is the number of variables that are additionally loadable after the removal of variables. Thus, a group that falls below this additionally loadable number of variables is selected from the groups #4 to #6 for which optimization computation has not been performed. That is, a process S22 of selecting a variable group within the upper limit imposed by the loadable data quantity of the Ising machine is performed with respect to the groups #4 to #6. The result is a set of variables 62 used in next optimization computation.

As was described above, the number of variables additionally loadable after the removal of variables is used as a basis to select one or more groups in the descending order of likelihood of occurrence of constraint violation, and the variables belonging to the selected group(s) are newly added to the optimization target variable list Target_List (see Fig. 6). This arrangement enables the realization of efficient optimization computation that utilizes resources to the maximum extent, without wasting hardware resources and the like used for optimization computation.

Referring to Fig. 6 again, in step S8, the optimization computation unit 24 creates a QUBO model based on only the variables given in the optimization target variable list Target_List, and performs optimization computation based on this QUBO model. The approximate solution obtained by this optimization computation is stored in the data storage unit 20 as the best solution 20C (Fig. 2).

The objective function to be minimized in the optimization problem is defined by the formula (2) previously noted, which includes all the variables belonging to all the groups. Accordingly, when performing optimization computation in step S8, some of the elements of the matrix A appearing in the objective function formula are disregarded, thereby retaining only the elements corresponding to the variables used in optimization computation.

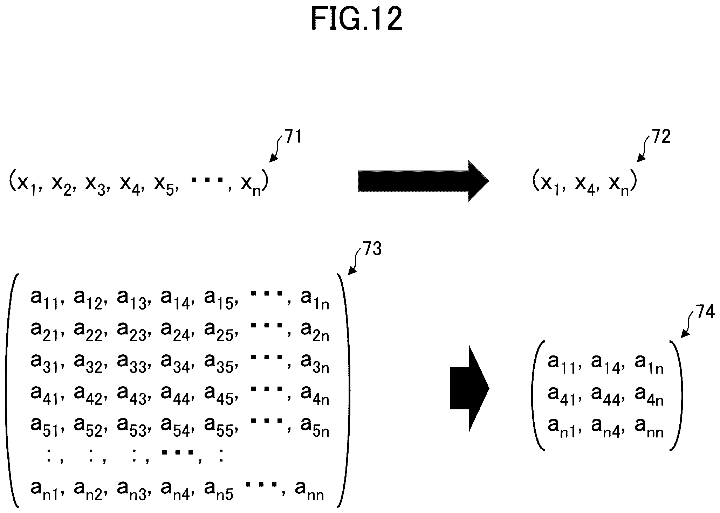

Fig. 12 is a drawing illustrating a process of reducing the number of elements of a matrix. As illustrated in Fig. 12, when a vector 71 of n variables $x_1$ to $x_n$ defining the optimization problem is given, a matrix 73 defining the objective function has n×n elements $a_{ij}$ (i=1 to n, j=1 to n). As noted above, some groups are selected from the plurality of groups and some variables obtained by this selection are subsequently disregarded, thereby creating a vector 72 containing only a subset of the elements of the vector 71.

Namely, the variables to be subjected to optimization computation performed by the optimization computation unit 24 are three variables $x_1$, $x_4$, and $x_n$ that are the elements of the vector 72. In this case, a matrix 74 defining the objective function is a matrix containing nine elements, $a_{11}$, $a_{14}$, $a_{1n}$, $a_{41}$, $a_{44}$, $a_{4n}$, $a_{n1}$, $a_{n4}$, and $a_{nn}$ that correspond to these three variables. In this manner, the optimization computation unit 24 disregards some elements of the matrix A in accordance with the variables subjected to optimization computation to create an appropriate objective function for use in the optimization computation, followed by performing optimization computation by use of the Ising machine.

Referring to Fig. 6 again, in step S9, the variable select unit 25 estimates and removes variables whose values are unlikely to be 1 in the optimal solution based on the derived solution (i.e., the best solution 20C) among all the variables of the variable groups deleted from G_List, thereby retaining no greater than (N-N_{target}) variables that are the candidates constituting a solution. Namely, the variable select unit 25 selects the to-be-excluded variables from all the variables belonging to the groups which include variables contained in the approximate solution obtained by the optimization computation, rather than selecting the to-be-excluded variables from the variables included in the approximate solution.

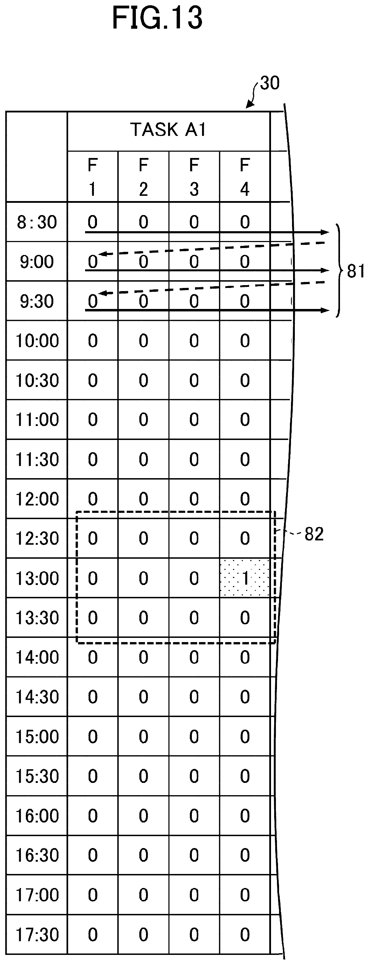

Fig. 13 is a drawing illustrating an example of a process of estimating variables whose values are unlikely to be 1 in the optimal solution. Fig. 13 illustrates the portion of the table 30 illustrated in Fig. 3 which portion relates to the task A1.

When the optimization problem is formulated in a straightforward manner, the order in which numbers are assigned to the subscripts of variables is generally a simple scan order. For example, as indicated by the arrows of scan order allocation 81 in Fig. 13, subscript numbers 1 to 4 are assigned to the four respective variables that correspond to the four columns "F1" to "F4" of the task A1 in the first row of the table 30. Further, subscript numbers 5 to 8 are assigned to the four respective variables that correspond to the four columns "F1" to "F4" of the task A1 in the second row of the table 30. Similar allocation is made with respect to the third to nineteenth rows, so that variables $x_1$ through $x_{76}$ with consecutive subscripts are allocated to the 76 cells in the 19 rows and 4 columns belonging to the group corresponding to the task A1 in the table 30.

When subscript numbers are assigned in this manner, a cell group 82 comprised of cells relatively close to each other are assigned with consecutive subscript numbers close to each other, and the corresponding variables are associated with conditions relatively close to each other.

Variables that are situated in the proximity of a variable whose value is 1 in the obtained approximate solution and that have relatively close subscript numbers to this variable are associated with conditions that are relatively close to those of this variable having a value of 1. These variables are thus estimated to be reasonably likely to be 1 in the optimal solution, and should be left to remain. In contrast, variables that have subscript numbers sufficiently far away from a variable whose value is 1 in the approximate solution are associated with conditions significantly different from those of this variable having a value of 1. These variables are thus estimated to be unlikely to be 1 in the optimal solution, and can be removed.

When the variable at the "13:00" time slot on "F4" of the task A1 is 1 in the approximate solution as illustrated in the example of Fig. 13, the variables corresponding to the cell group 82 may be left to remain based on the determination that they can potentially become 1 in the optimal solution. Variables corresponding to cells outside the cell group 82 may be excluded from the variables for optimization computation due to the estimation that they are unlikely to be 1 in the optimal solution.

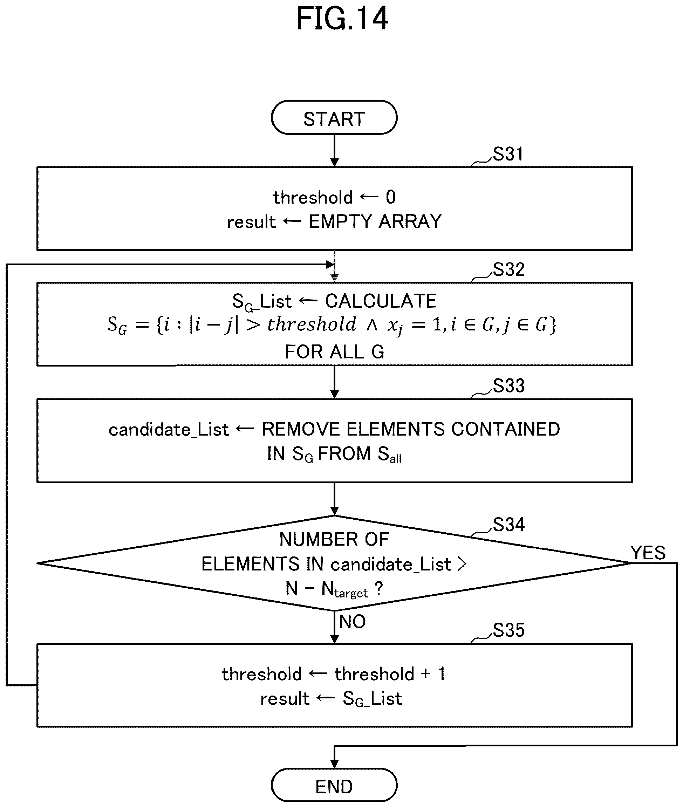

Fig. 14 is a flowchart illustrating an example of the process of excluding variables described in Fig. 13.

In step S31, the variable select unit 25 sets a threshold variable "threshold" to zero, and stores an empty array in a result list "result".

In step S32, the variable select unit 25 stores in $S_G$ all the values of subscript i in the group of interest for which the absolute-value distance I i-j I is greater than the threshold value "threshold" where j is the subscript of the variable $x_j$ having a value of 1 in the approximate solution. The variable select unit 25 further stores $S_G$ obtained for each group in $S_G\_List$.

In step S33, the variable select unit 25 stores in candidate_List the subscript values that remain after removing the elements included in $S_G$ of $S_G\_List$ from a subscript set $S_{all}$ having all subscript values as the elements thereof. With this arrangement, the subscript values significantly different from the subscript value of the variable whose value is 1 in the approximate solution are excluded (removed), and the other subscript values are left to remain.

In step S34, the variable select unit 25 determines whether the number of elements stored in candidate_List is greater than N-$N_{target}$. N is the loadable size, and $N_{target}$ is the number of variables belonging to the next following unselected group. That is, a check is made as to whether the number of variable candidates left to remain for next optimization computation is greater than the loadable size minus the number of variables belonging to the next unselected group, i.e., whether all the variables belonging to the next unselected group can be included in the next optimization computation. In the case of the check result indicating "NO", the procedure proceeds to step S35. In the case of the check result indicating "YES", the procedure comes to an end.

In step S35, the variable select unit 25 increases the threshold variable "threshold" by 1, and stores the content of $S_G\_List$ in the result list "result". Thereafter, the procedure returns to step S32, from which the subsequent processes are repeated.

In the manner described above, the threshold variable "threshold" is gradually increased, and, together therewith, the number of candidate variables left to remain is gradually increased. As a result, the number of candidate variables is set to the maximum number possible such that all the variables belonging to the next unselected group can be included in the next optimization computation.

In the above-described process, in each of the selected groups, the value of the subscript of the variable whose value is 1 in an approximate solution may be a first subscript value, and the value of the subscript of the variable of interest may be a second subscript value. In such a case, the variable of interest is removed upon finding that the difference between the first subscript value and the second subscript value is greater than the desired threshold value. Choosing the to-be-removed variables in such a manner allows simple calculation to achieve highly reliable removal of variables that do not contribute to the optimal solution in each group. Further, the number of candidate variables left to remain is gradually increased while gradually increasing the threshold variable "threshold", so that efficient optimization computation is realized without creating excess margin for the optimization computation.

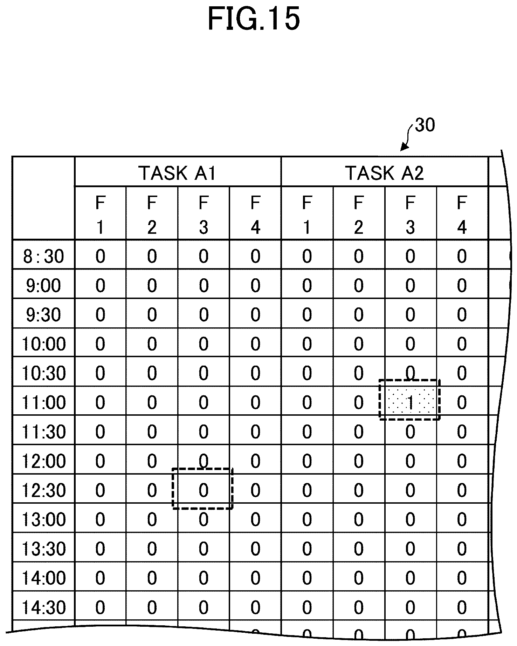

Fig. 15 is a drawing illustrating another example of a process of estimating variables whose values are unlikely to be 1 in the optimal solution. Fig. 15 illustrates the portion of the table 30 illustrated in Fig. 3 which portion relates to the task A1 and the task A2. In this example, there are restrictions on the order in which the task A1 and the task A2 are performed. The situation in this example is such that the task A2 can be started only after the task A1 is completed.

In the example illustrated in Fig. 15, the variable value at the 11:00 time slot on "F3" (facility 3) of the task A2 is 1 in the approximate solution obtained by optimization computation as indicated by a dotted-line box in the table 30, which indicates that this task starts at "11:00" time slot. In this case, the variables belonging to the task A1 are each successively selected as the variable of interest, and a coefficient of the product of the variable of interest and the variable having a value of 1 in the task A2 is considered. When the coefficient value is large, a change in the value of the variable of interest from 0 to 1 causes the value of the objective function to change significantly. The fact that a change in the value of the variable of interest from 0 to 1 causes the value of the objective function to change significantly provides reasonable grounds to assume that this variable of interest is not 1 in the optimal solution.

The variable at the "12:30" time slot on "F3" of the task A1 indicated by another dotted-line box may be noted as the variable of interest in the example illustrated in Fig. 15. When the coefficient of the product of this variable of interest and the variable having a value of 1 in the task A2 is large, this variable of interest may reasonably be excluded. Similar approach may be applied to other variables belonging to the task A1 to determine whether to exclude these variables in accordance with the relevant coefficient values.

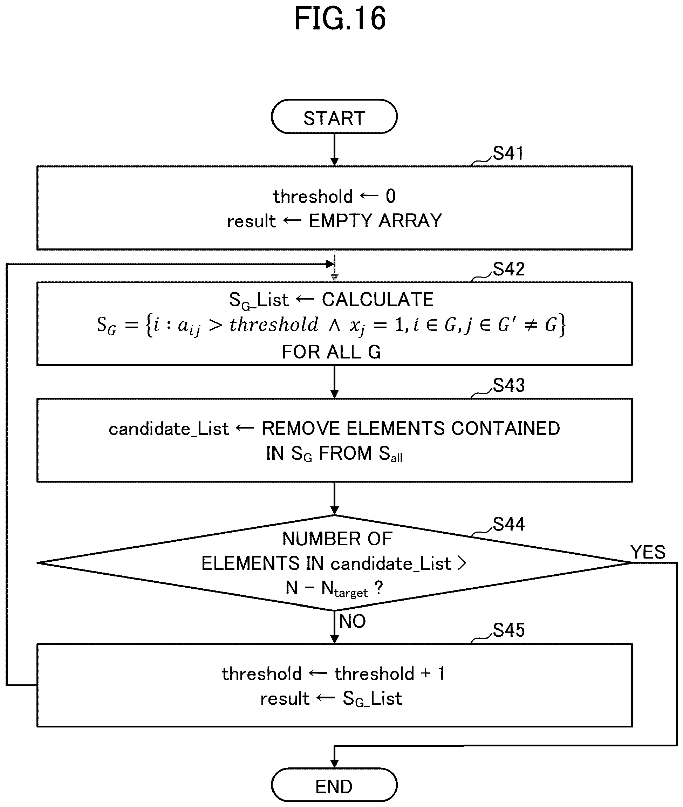

Fig. 16 is a flowchart illustrating an example of the process of excluding variables described in Fig. 15.

In step S41, the variable select unit 25 sets a threshold variable "threshold" to zero, and stores an empty array in a result list "result".

In step S42, the variable select unit 25 stores in $S_G$ all the values of subscript i for which the coefficient $a_{ij}$ of the product of the variable $x_i$ belonging to the group of interest and the variable $x_j$ having a value of 1 in the approximate solution in any other group is greater than the value of the threshold variable "threshold". The variable select unit 25 further stores $S_G$ obtained for each group in $S_G\_List$.

In step S43, the variable select unit 25 stores in candidate_List the subscript values that remain after removing the elements included in $S_G$ of $S_G\_List$ from a subscript set $S_{all}$ having all subscript values as the elements thereof. With this arrangement, the subscript values significantly different from the subscript value of the variable whose value is 1 in the approximate solution are excluded (removed), and the other subscript values are left to remain.

In step S44, the variable select unit 25 determines whether the number of elements stored in candidate_List is greater than $N-N_{target}$. N is the loadable size, and $N_{target}$ is the number of variables belonging to the next following unselected group. That is, a check is made as to whether the number of variable candidates left to remain for next optimization computation is greater than the loadable size minus the number of variables belonging to the next unselected group, i.e., whether all the variables belonging to the next unselected group can be included in the next optimization computation. In the case of the check result indicating "NO", the procedure proceeds to step S35. In the case of the check result indicating "YES", the procedure comes to an end.

In step S45, the variable select unit 25 increases the threshold variable "threshold" by 1, and stores the content of $S_G\_List$ in the result list "result". Thereafter, the procedure returns to step S32, from which the subsequent processes are repeated.

In the manner described above, the threshold variable "threshold" is gradually increased, and, together therewith, the number of candidate variables left to remain is gradually increased. As a result, the number of candidate variables is set to the maximum number possible such that all the variables belonging to the next unselected group can be included in the next optimization computation.

In the above-described processes, the variable of interest is excluded when the product of this variable of interest belonging to one group and a variable having a value of 1 in another group has a coefficient in the objective function formula used in optimization computation and this coefficient is greater than a desired threshold value. Choosing the to-be-removed variables in such a manner allows simple calculation to achieve highly reliable removal of variables that do not contribute to the optimal solution in each group. Further, the number of candidate variables left to remain is gradually increased while gradually increasing the threshold variable "threshold", so that efficient optimization computation is realized without creating excess margin for the optimization computation.

It may be noted that the two methods of performing the variable exclusion process illustrated in Fig. 14 and Fig. 16 are independent of each other, and the variable select unit 25 may determine a variable to be left to remain as a candidate variable constituting a solution by using any one of these methods that is selected in advance. Alternatively, the variable select unit 25 may combine these two methods to remove the variable that is determined to be removed by at least one of the criteria illustrated in steps S32 and S42, thereby determining the variable to be left to remain as the candidate variable.

Referring to the flowchart illustrated in Fig. 6 again, in step S10, the group extraction unit 23 overwrites Target_List with the extracted solution candidate variables, and sets the number of the extracted solution candidate variables to the data quantity variable n. Thereafter, the procedure returns to step S3, and either repeats the above-described processes in step S4 and the subsequent steps, or proceeds to step S11, depending on whether G_List is empty.

Upon finding in step S3 that G List is empty, i.e., upon performing the variable exclusion processes based on approximate solutions for all the groups appearing in the formulated optimization problem, the process proceeds to Step S11.

In step S11, the optimization computation unit 24 creates a QUBO model based on only the variables given in Target_List, and performs optimization computation by use of the Ising machine. At this point, the variables stored in Target_List are the variables remaining after the removal performed based on the approximate solution obtained by the last optimization computation performed in step S8. The variables remaining in Target_List at this point are thus a new combination of variables, and optimization computation has not yet been performed for this combination. In consideration of this, in step S11, the optimization computation unit 24 performs optimization computation with respect to the variables stored in Target_List.

In step S12, the variable select unit 25 uses a derived solution as a basis to estimate, and remove, variables whose values are unlikely to be 1 in the optimal solution among all the variables of all the variable groups, thereby extracting no greater than N variables that are candidates constituting a solution. That is, the variable select unit 25 uses the approximate solution obtained in step S11 as a basis to apply the variable exclusion process illustrated in the previously described Fig. 14 or Fig. 16, thereby estimating variables that are unlikely to be 1 in the optimal solution among all the variables of all the groups. In accordance with the result of estimation, the variable select unit 25 removes the variables that are unlikely to be 1 to retain no greater than N variables (i.e., equal in number to the loadable size).

In step S13, the termination check unit 27 sets a large positive value to a variable Best. This process is the initial value setting process that is performed only when the control procedure first reaches step S13.

In step S14, the optimization computation unit 24 performs optimization by using the Ising machine with respect to the candidate variables obtained in step S12. That is, the optimization computation unit 24 performs optimization computation with respect to the no greater than N variables obtained upon variable removal in step S12 to derive an approximate solution.

In step S15, the optimization computation unit 24 set Energy to the energy value (i.e., the value of the objective function) obtained by optimization. In step S16, the termination check unit 27 checks whether Energy is less than Best. Upon finding that Energy is less than Best (YES), the procedure proceeds to step S17. Upon finding that Energy is greater than or equal to Best (NO), the procedure proceeds to step S18.

In step S16, the termination check unit 27 updates the value of Best with the value of Energy, and the optimization computation unit 24 stores the values of variables obtained as the results of optimization in Best_State. In the configuration illustrated in Fig. 2, the process of storing the values of variables resulting from optimization in Best_State corresponds to the process by which the optimization computation unit 24 stores the values of variables of the approximate solution obtained by optimization computation as the best solution 20C in the data storage unit 20.

Thereafter, the procedure returns to step S12, from which the subsequent processes are repeated. With this arrangement, the process of repeatedly performing optimization computation includes newly selecting variables each round and then performing optimization computation with respect to the selected variables. Such optimization computation continues to be repeated as long as the value of the objective function obtained by optimization computation is less than the value of the objective function obtained by the immediately preceding optimization computation.

When the value of the objective function stops falling, the procedure proceeds to step S18, in which the data output unit 28 outputs Best_State, which is the best solution obtained by the optimization computation, and Best, which is the value of the objective function for this best solution.

According to at least one embodiment, an optimization technique is provided that can provide an optimal solution or a satisfactory approximate solution when handling a problem whose size exceeds the predetermined amount of input data in an optimization apparatus.

### Claims

1. An optimization apparatus for obtaining an approximate solution by performing optimization computation with respect to an optimization problem that involves a plurality of variables each taking either a first value or a second value, the plurality of variables grouped into a plurality of groups, among which any given group is under a constraint that an exactly predetermined number of variables among variables belonging to the given group take the second value, the optimization apparatus comprising:

   an optimization computation unit configured to perform optimization computation with respect to first variables subjected to optimization computation among variables belonging to one or more selected groups selected from the plurality of groups so as to obtain an approximate solution satisfying the constraint; and
   a variable select unit configured to estimate and remove, based on the approximate solution, variables that are unlikely to take the second value in an optimal solution, thereby leaving second variables to remain in each of the one or more selected groups,
   wherein the optimization computation unit newly performs optimization computation after updating the first variables with the second variables and third variables belonging to at least one unselected group, thereby repeatedly performing optimization computation by newly including, for each optimization computation, variables belonging to one or more previously unselected groups.

2. The optimization apparatus as claimed in claim 1, wherein a number of the first variables is less than or equal to a predetermined number, and a sum of a number of the third variables and the number of the first variables is greater than the predetermined number, a sum of a number of the second variables and the number of the third variables being less than or equal to the predetermined number.

3. The optimization apparatus as claimed in claim 1 or 2, wherein in each of the selected groups, a value of a subscript of a variable whose value is the second value in the approximate solution is a first subscript value, and a value of a subscript of a variable of interest is a second subscript value, wherein the variable select unit removes the variable of interest upon finding that a difference between the first subscript value and the second subscript value is greater than a desired threshold value.

4. The optimization apparatus as claimed in claim 1 or 2, wherein the variable select unit removes a variable of interest belonging to one group among the one or more selected groups when a product of the variable of interest and a variable that is in another group among the one or more selected groups and that takes the second value in the approximate solution has a coefficient in an objective function formula used in optimization computation and the coefficient is greater than a desired threshold value.

5. The optimization apparatus as claimed in any one of claims 1 to 4, further comprising:

   a violation likelihood calculation unit configured to calculate likelihood of occurrence of constraint violation for each of the plurality of groups; and
   a group extraction unit configured to extract groups from the plurality of groups in a descending order of the likelihood of occurrence of constraint violation,
   wherein the optimization computation unit repeatedly performs optimization computation by newly including, for each optimization computation, variables belonging to one or more groups extracted by the group extraction unit.

6. The optimization apparatus as claimed in claim 5, wherein the likelihood of occurrence of constraint violation calculated by the violation likelihood calculation unit with respect to the group of interest among the plurality of groups increases as a number of non-zero coefficients increases among coefficients that relate to a square term of variables belonging to the group of interest and that are included in an objective function formula used in optimization computation.

7. The optimization apparatus as claimed in claim 5, wherein the likelihood of occurrence of constraint violation calculated by the violation likelihood calculation unit with respect to the group of interest among the plurality of groups increases as an average value of non-zero coefficients increases among coefficients that relate to a square term of variables belonging to the group of interest and that are included in an objective function formula used in optimization computation.

8. The optimization apparatus as claimed in claim 5, wherein first coefficients in an objective function formula used for optimization computation are each multiplied with a respective product of a variable belonging to a group of interest among the plurality of groups and a variable belonging to a group other than the group of interest among the plurality of groups, and the likelihood of occurrence of constraint violation calculated by the violation likelihood calculation unit with respect to the group of interest increases as a number of non-zero coefficients among the first coefficients increases.

9. The optimization apparatus as claimed in claim 5, wherein first coefficients in an objective function formula used for optimization computation are each multiplied with a respective product of a variable belonging to a group of interest among the plurality of groups and a variable belonging to a group other than the group of interest among the plurality of groups, and the likelihood of occurrence of constraint violation calculated by the violation likelihood calculation unit with respect to the group of interest increases as a variance of non-zero coefficients among the first coefficients increases.

10. An optimization method of obtaining an approximate solution by performing optimization computation with respect to an optimization problem that involves a plurality of variables each taking either a first value or a second value, the plurality of variables grouped into a plurality of groups, among which any given group is under a constraint that an exactly predetermined number of variables among variables belonging to the given group take the second value, the optimization method comprising:

   performing optimization computation with respect to first variables subjected to optimization computation among variables belonging to one or more selected groups selected from the plurality of groups so as to obtain an approximate solution satisfying the constraint; and

estimating and removing, based on the approximate solution, variables that are unlikely to take the second value in an optimal solution, thereby leaving second variables to remain in each of the one or more selected groups,

wherein optimization computation is newly performed after updating the first variables with the second variables and third variables belonging to at least one unselected group, thereby repeatedly performing optimization computation by newly including, for each optimization computation, variables belonging to one or more previously unselected groups.

11. A computer program for obtaining an approximate solution by performing optimization computation with respect to an optimization problem that involves a plurality of variables each taking either a first value or a second value, the plurality of variables grouped into a plurality of groups, among which any given group is under a constraint that an exactly predetermined number of variables among variables belonging to the given group take the second value, the computer program comprising instructions which, when the program is executed by a computer, causes the computer to perform:

performing optimization computation with respect to first variables subjected to optimization computation among variables belonging to one or more selected groups selected from the plurality of groups so as to obtain an approximate solution satisfying the constraint; and

estimating and removing, based on the approximate solution, variables that are unlikely to take the second value in an optimal solution, thereby leaving second variables to remain in each of the one or more selected groups,

wherein optimization computation is newly performed after updating the first variables with the second variables and third variables belonging to at least one unselected group, thereby repeatedly performing optimization computation by newly including, for each optimization computation, variables belonging to one or more previously unselected groups.

# FIG.1

EP 4 016 337 A1

# FIG.2

```
DATA ACQUISITION UNIT (21)
VIOLATION LIKELIHOOD CALCULATION UNIT (22)
GROUP EXTRACTION UNIT (23)
OPTIMIZATION COMPUTATION UNIT (24)
VARIABLE SELECT UNIT (25)
VARIABLE FIX UNIT (26)
TERMINATION CHECK UNIT (27)
DATA OUTPUT UNIT (28)

20
VARIABLE GROUP INFORMATION (20A)
OPTIMIZATION COMPUTATION VARIABLE GROUP (20B)
BEST SOLUTION (20C)
FIXED VARIABLE LIST (20D)
```

EP 4 016 337 A1

# FIG.3

| | TASK A1 | | | | TASK A2 | | | | TASK A3 | | | | TASK B1 | | | | TASK B2 | | | | TASK B3 | | | | TASK C1 | | | | TASK C2 | | | |
|---|---|---|---|---|---|---|---|---|---|---|---|---|---|---|---|---|---|---|---|---|---|---|---|---|---|---|---|---|---|---|---|---|
| | F1 | F2 | F3 | F4 | F1 | F2 | F3 | F4 | F1 | F2 | F3 | F4 | F1 | F2 | F3 | F4 | F1 | F2 | F3 | F4 | F1 | F2 | F3 | F4 | F1 | F2 | F3 | F4 | F1 | F2 | F3 | F4 |
| 8:30 | 1 | 0 | 0 | 0 | 0 | 0 | 0 | 0 | 0 | 0 | 0 | 0 | 0 | 0 | 0 | 1 | 0 | 0 | 0 | 0 | 0 | 0 | 0 | 0 | 0 | 0 | 0 | 0 | 0 | 0 | 0 | 0 |
| 9:00 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 9:30 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 10:00 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 10:30 | 0 | 0 | 0 | 0 | 0 | 0 | 0 | 0 | 0 | 0 | 0 | 0 | 0 | 0 | 0 | 0 | 1 | 0 | 0 | 0 | 0 | 0 | 0 | 0 | 0 | 0 | 0 | 0 | 0 | 0 | 0 | 0 |
| 11:00 | 0 | 0 | 0 | 0 | 0 | 0 | 1 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 11:30 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 1 | 0 | 0 | 0 | 0 | 0 | 0 |
| 12:00 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 12:30 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 13:00 | 0 | 0 | 0 | 0 | 0 | 0 | 0 | 0 | 0 | 0 | 0 | 1 | 0 | 0 | 0 | 0 | 0 | 0 | 0 | 0 | 0 | 0 | 0 | 0 | 0 | 0 | 0 | 0 | 0 | 0 | 0 | 0 |
| 13:30 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 1 | 0 | 0 | 0 | 0 | 0 | 0 | 0 | 0 | 0 |
| 14:00 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 1 | 0 | 0 |
| 14:30 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 15:00 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 15:30 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 16:00 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 16:30 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 17:00 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 17:30 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |

31

EP 4 016 337 A1

# FIG.4

| | ORDER OF VISITS | | | | | | | | | |
|---|---|---|---|---|---|---|---|---|---|---|
| | 1 | 2 | 3 | 4 | 5 | 6 | 7 | 8 | 9 | 10 |
| CITY #1 | 0 | 1 | 0 | 0 | 0 | 0 | 0 | 0 | 0 | 0 |
| CITY #2 | 1 | 0 | 0 | 0 | 0 | 0 | 0 | 0 | 0 | 0 |
| CITY #3 | 0 | 0 | 0 | 1 | 0 | 0 | 0 | 0 | 0 | 0 |
| CITY #4 | 0 | 0 | 0 | 0 | 0 | 0 | 0 | 0 | 1 | 0 |
| CITY #5 | 0 | 0 | 0 | 0 | 0 | 1 | 0 | 0 | 0 | 0 |
| CITY #6 | 0 | 0 | 0 | 0 | 0 | 0 | 0 | 0 | 0 | 1 |
| CITY #7 | 0 | 0 | 0 | 0 | 0 | 0 | 0 | 1 | 0 | 0 |
| CITY #8 | 0 | 0 | 1 | 0 | 0 | 0 | 0 | 0 | 0 | 0 |
| CITY #9 | 0 | 0 | 0 | 0 | 1 | 0 | 0 | 0 | 0 | 0 |
| CITY #10 | 0 | 0 | 0 | 0 | 0 | 0 | 1 | 0 | 0 | 0 |

32

33

EP 4 016 337 A1

# FIG.5

$G1$

$x_1, x_2, ..., x_{k_1}, ..., x_{j_1}$

$G2$

$x_{j_1+1}, x_{j_1+2}, ..., x_{k_2}, ..., x_{j_2}$

$G3$

$x_{j_2+1}, x_{j_2+2}, ..., x_{k_3}, ..., x_{j_3}$

$G4$

$x_{j_3+1}, x_{j_3+2}, ..., x_{k_4}, ..., x_{j_4}$

45

OPTI-MIZATION

$G1$

$x_1, x_2, ..., x_{k_1}, ..., x_{j_1}$
0    0        1        0

$G2$

$x_{j_1+1}, x_{j_1+2}, ..., x_{k_2}, ..., x_{j_2}$
0    0        1        0

$G3$

$x_{j_2+1}, x_{j_2+2}, ..., x_{k_3}, ..., x_{j_3}$

$G4$

$x_{j_3+1}, x_{j_3+2}, ..., x_{k_4}, ..., x_{j_4}$

46

VARI-ABLE REMOVAL

$G1$

✗ ✗ ..., $x_{k_1}, ..., x_{j_1}$
41  42

$G2$

$x_{j_1+1}, $✗$, ..., x_{k_2}, ..., $✗
43                            44

$G3$

$x_{j_2+1}, x_{j_2+2}, ..., x_{k_3}, ..., x_{j_3}$

$G4$

$x_{j_3+1}, x_{j_3+2}, ..., x_{k_4}, ..., x_{j_4}$

47

OPTI-MIZATION

EP 4 016 337 A1

# FIG.6

START

S1
N ← VALUE INDICATIVE OF DATA SIZE
LOADABLE TO ISING MACHINE
n ← 0
Target_List ← EMPTY ARRAY

S2
G_List ← SORTED GROUPS IN DESCENDING ORDER
OR LIKELIHOOD OF CONSTRAINT VIOLATION

S3
G_List EMPTY ?

NO →

YES ↓

S4
Target_Group ← TOP OF G_List
$N_{target}$ ← NUMBER OF VARIABLES IN Target_Group

S5
$n + N_{target} > N$ ?

NO →

YES ↓

S6
ADD VARIABLES IN
Target_Group to Target_List, AND
REMOVES Target_Group FROM G_List

S7
$n \leftarrow n + N_{target}$

S8
CREATE QUBO MODEL BASED ON VARIABLES
IN Target_List, AND PERFORM OPTIMIZATION

S9
ESTIMATE AND REMOVE VARIABLES UNLIKELY
TO BE 1 IN OPTIMAL SOLUTION AMONG ALL
VARIABLES OF VARIABLE GROUPS DELETED
FROM G_List, TO RETAIN NO GREATER THAN
(N-Ntarget) SOLUTION CANDIDATE VARIABLES

S10
Target_List ← RETAINED SOLUTION
CANDIDATE VARIABLES
n ← NUMBER OF SOLUTION
CANDIDATE VARIABLES

S11
CREATE QUBO MODEL BASED ON VARIABLES
IN Target_List, AND PERFORM OPTIMIZATION

S12
ESTIMATE AND REMOVE VARIABLES UNLIKELY TO BE
1 IN OPTIMAL SOLUTION AMONG ALL VARIABLES OF
ALL VARIABLE GROUPS, TO EXTRACT NO GREATER
THAN N SOLUTION CANDIDATE VARIABLES

S13
Best ← LARGE POSITIVE VALUE

S14
PERFORM OPTIMIZATION WITH RESPECT
TO SOLUTION CANDIDATE VARIABLES

S15
Energy ← ENERGY OF OPTIMIZED RESULT

S16
Energy < Best ?

NO →

YES ↓

S17
Best ← Energy
Best_State ← VARIABLE VALUES OF OPTIMIZED RESULT

S18
OUTPUT Best_State AND Best

END

EP 4 016 337 A1

# FIG.7

| | TASK A1 | | | | |
|---|---|---|---|---|---|
| | F1 | F2 | F3 | F4 | F1 |
| 8:30 | 0 | 0 | 0 | 0 | 0 |
| 9:00 | 0 | 0 | 0 | 0 | 0 |
| 9:30 | 0 | 0 | 0 | 0 | 0 |
| 10:00 | 0 | 0 | 0 | 0 | 0 |
| 10:30 | 0 | 0 | 0 | 0 | 0 |
| 11:00 | 0 | 0 | 0 | 0 | 0 |
| 11:30 | 0 | 0 | 0 | 0 | 0 |
| 12:00 | 0 | 0 | 0 | 0 | 0 |
| 12:30 | 0 | 0 | 0 | 0 | |
| 13:00 | 0 | 0 | 0 | 0 | |
| 13:30 | 0 | 0 | 0 | 0 | |
| 14:00 | 0 | 0 | 0 | 0 | |
| 14:30 | 0 | 0 | 0 | 0 | |
| 15:00 | 0 | 0 | 0 | 0 | |
| 15:30 | 0 | 0 | 0 | 0 | |
| 16:00 | 0 | 0 | 0 | 0 | |
| 16:30 | 0 | 0 | 0 | 0 | |
| 17:00 | 0 | 0 | 0 | 0 | |
| 17:30 | 0 | 0 | 0 | 0 | |

30

50

TIME OF COMPLETION

51

$$\begin{pmatrix} a_{11}, & a_{12}, & a_{13}, & \cdots, & a_{1n} \\ a_{21}, & a_{22}, & a_{23}, & \cdots, & a_{2n} \\ a_{31}, & a_{32}, & a_{33}, & \cdots, & a_{3n} \\ \vdots, & \vdots, & \vdots, & \cdots, & \vdots \\ a_{n1}, & a_{n2}, & a_{n3}, & \cdots, & a_{nn} \end{pmatrix}$$

52

$$D_G = \sum_{a_{ii} \neq 0,\, i \in G} 1$$

53

EP 4 016 337 A1

# FIG.8

| | TASK A1 | | | | |
|---|---|---|---|---|---|
| | F 1 | F 2 | F 3 | F 4 | F 1 |
| 8:30 | 0 | 0 | 0 | 0 | 0 |
| 9:00 | 0 | 0 | 0 | 0 | 0 |
| 9:30 | 0 | 0 | 0 | 0 | 0 |
| 10:00 | 0 | 0 | 0 | 0 | 0 |
| 10:30 | 0 | 0 | 0 | 0 | 0 |
| 11:00 | 0 | 0 | 0 | 0 | 0 |
| 11:30 | 0 | 0 | 0 | 0 | 0 |
| 12:00 | 0 | 0 | 0 | 0 | 0 |
| 12:30 | 0 | 0 | 0 | 0 | |
| 13:00 | 0 | 0 | 0 | 0 | |
| 13:30 | 0 | 0 | 0 | 0 | |
| 14:00 | 0 | 0 | 0 | 0 | |
| 14:30 | 0 | 0 | 0 | 0 | |
| 15:00 | 0 | 0 | 0 | 0 | |
| 15:30 | 0 | 0 | 0 | 0 | |
| 16:00 | 0 | 0 | 0 | 0 | |
| 16:30 | 0 | 0 | 0 | 0 | |
| 17:00 | 0 | 0 | 0 | 0 | |
| 17:30 | 0 | 0 | 0 | 0 | |

TIME OF COMPLETION

30

50

51

52

$$\begin{pmatrix} a_{11}, & a_{12}, & a_{13}, & \cdots, & a_{1n} \\ a_{21}, & a_{22}, & a_{23}, & \cdots, & a_{2n} \\ a_{31}, & a_{32}, & a_{33}, & \cdots, & a_{3n} \\ :, & :, & :, & \cdots, & : \\ a_{n1}, & a_{n2}, & a_{n3}, & \cdots, & a_{nn} \end{pmatrix}$$

54

$$D_G = \sum_{a_{ii} \neq 0,\, i \in G} \frac{|a_{ii}|}{n}$$

# FIG.9

$$D_G = \sum_{i \in G} \sum_{a_{ij} \neq 0, j \in G', G' \neq G} 1$$

# FIG.10

Table (30):

| | TASK A1 | | | | TASK A2 | | | | |
|---|---|---|---|---|---|---|---|---|---|
| | F1 | F2 | F3 | F4 | F1 | F2 | F3 | F4 | F1 |
| 8:30 | 0 | 0 | 0 | 0 | 0 | 0 | 0 | 0 | 0 |
| 9:00 | 0 | 0 | 0 | 0 | 1 | 0 | 0 | 0 | 0 |
| 9:30 | 0 | 0 | 0 | 0 | 0 | 0 | 0 | 0 | 0 |
| 10:00 | 0 | 0 | 0 | 0 | 0 | 0 | 0 | 0 | 0 |
| 10:30 | 0 | 1 | 1 | 0 | 0 | 0 | 0 | 0 | 0 |
| 11:00 | 0 | 0 | 0 | 0 | 0 | 0 | 0 | 0 | 0 |
| 11:30 | 0 | 0 | 0 | 0 | 0 | 0 | 0 | 0 | 0 |
| 12:00 | 0 | 0 | 0 | 0 | 0 | 0 | 0 | 0 | |
| 12:30 | 0 | 0 | 0 | 0 | 0 | 0 | 0 | 0 | |
| 13:00 | 0 | 0 | 0 | 0 | 0 | 0 | 0 | 0 | |
| 13:30 | 0 | 0 | 0 | 0 | 0 | 0 | 0 | 0 | |
| 14:00 | 0 | 0 | 0 | 0 | 0 | 0 | 0 | 0 | |
| 14:30 | 0 | 0 | 0 | 0 | 0 | 0 | 0 | 0 | |
| 15:00 | 0 | 0 | 0 | 0 | 0 | 0 | 0 | 0 | |
| 15:30 | 0 | 0 | 0 | 0 | 0 | 0 | 0 | 0 | |
| 16:00 | 0 | 0 | 0 | 0 | 0 | 0 | 0 | 0 | |

(59)

$$D_G = \frac{\sum_{i \in G} \sum_{a_{ij} \neq 0, j \in G', G' \neq G} \left( a_{ij} - \frac{\sum_{i' \in G} \sum_{a_{i'j'} \neq 0, j' \in G', G' \neq G} a_{i'j'}}{\sum_{i' \in G} \sum_{a_{i'j'} \neq 0, j' \in G', G' \neq G} 1} \right)^2}{\sum_{i \in G} \sum_{a_{ij} \neq 0, j \in G', G' \neq G} 1}$$

EP 4 016 337 A1

# FIG.11

**OPTIMIZATION ALREADY PERFORMED**

60

VARIABLE GROUP #1: $x_{11}$ $x_{12}$ $x_{13}$ · · · $x_{1k}$

VARIABLE GROUP #2: $x_{21}$ $x_{22}$ $x_{23}$ · · · $x_{2m}$

VARIABLE GROUP #3: $x_{31}$ $x_{32}$ $x_{33}$ · · · $x_{3n}$

S21
SELECT AND REMOVE VARIABLES THAT ARE NOT SOLUTION VARIABLE CANDIDATE

**USED IN NEXT OPTIMIZATION**

62

$x_{11}$ · · · $x_{1k'}$

$x_{21}$ $x_{23}$ · · · $x_{2m'}$

$x_{32}$ · · · $x_{3n'}$

$x_{41}$ $x_{42}$ $x_{43}$ · · · $x_{4p}$

$x_{51}$ $x_{52}$ $x_{53}$ · · · $x_{5q}$

**OPTIMIZATION NOT YET PERFORMED**

61

VARIABLE GROUP #4: $x_{41}$ $x_{42}$ $x_{43}$ · · · $x_{4p}$

VARIABLE GROUP #5: $x_{51}$ $x_{52}$ $x_{53}$ · · · $x_{5q}$

VARIABLE GROUP #6: $x_{61}$ $x_{62}$ $x_{63}$ · · · $x_{6r}$

S22
SELECT VARIABLES WITHIN UPPER LIMIT EQUAL TO LOADABLE DATA QUANTITY OF ISING MACHINE

EP 4 016 337 A1

# FIG.12

$(x_1, x_2, x_3, x_4, x_5, \cdots, x_n)$ ⟶ 71

$\Rightarrow$

$(x_1, x_4, x_n)$ ⟶ 72

$$\begin{pmatrix} a_{11}, a_{12}, a_{13}, a_{14}, a_{15}, \cdots, a_{1n} \\ a_{21}, a_{22}, a_{23}, a_{24}, a_{25}, \cdots, a_{2n} \\ a_{31}, a_{32}, a_{33}, a_{34}, a_{35}, \cdots, a_{3n} \\ a_{41}, a_{42}, a_{43}, a_{44}, a_{45}, \cdots, a_{4n} \\ a_{51}, a_{52}, a_{53}, a_{54}, a_{55}, \cdots, a_{5n} \\ \vdots, \vdots, \vdots, \cdots, \vdots \\ a_{n1}, a_{n2}, a_{n3}, a_{n4}, a_{n5} \cdots, a_{nn} \end{pmatrix}$$ ⟶ 73

$\Rightarrow$

$$\begin{pmatrix} a_{11}, a_{14}, a_{1n} \\ a_{41}, a_{44}, a_{4n} \\ a_{n1}, a_{n4}, a_{nn} \end{pmatrix}$$ ⟶ 74

EP 4 016 337 A1

EP 4 016 337 A1

# FIG.13

30

| | TASK A1 | | | | |
|---|---|---|---|---|---|
| | F 1 | F 2 | F 3 | F 4 | |
| 8:30 | 0 | 0 | 0 | 0 | |
| 9:00 | 0 | 0 | 0 | 0 | 81 |
| 9:30 | 0 | 0 | 0 | 0 | |
| 10:00 | 0 | 0 | 0 | 0 | |
| 10:30 | 0 | 0 | 0 | 0 | |
| 11:00 | 0 | 0 | 0 | 0 | |
| 11:30 | 0 | 0 | 0 | 0 | |
| 12:00 | 0 | 0 | 0 | 0 | |
| 12:30 | 0 | 0 | 0 | 0 | 82 |
| 13:00 | 0 | 0 | 0 | 1 | |
| 13:30 | 0 | 0 | 0 | 0 | |
| 14:00 | 0 | 0 | 0 | 0 | |
| 14:30 | 0 | 0 | 0 | 0 | |
| 15:00 | 0 | 0 | 0 | 0 | |
| 15:30 | 0 | 0 | 0 | 0 | |
| 16:00 | 0 | 0 | 0 | 0 | |
| 16:30 | 0 | 0 | 0 | 0 | |
| 17:00 | 0 | 0 | 0 | 0 | |
| 17:30 | 0 | 0 | 0 | 0 | |

# FIG.14

START

S31

threshold ← 0
result ← EMPTY ARRAY

S32

$S_G$_List ← CALCULATE
$S_G = \{i : |i - j| > threshold \land x_j = 1, i \in G, j \in G\}$
FOR ALL G

S33

candidate_List ← REMOVE ELEMENTS CONTAINED
IN $S_G$ FROM $S_{all}$

S34

NUMBER OF
ELEMENTS IN candidate_List >
N − $N_{target}$ ?

YES

NO

S35

threshold ← threshold + 1
result ← $S_G$_List

END

# FIG.15

30

| | TASK A1 | | | | TASK A2 | | | | |
|---|---|---|---|---|---|---|---|---|---|
| | F 1 | F 2 | F 3 | F 4 | F 1 | F 2 | F 3 | F 4 | |
| 8：30 | 0 | 0 | 0 | 0 | 0 | 0 | 0 | 0 | |
| 9:00 | 0 | 0 | 0 | 0 | 0 | 0 | 0 | 0 | |
| 9:30 | 0 | 0 | 0 | 0 | 0 | 0 | 0 | 0 | |
| 10:00 | 0 | 0 | 0 | 0 | 0 | 0 | 0 | 0 | |
| 10:30 | 0 | 0 | 0 | 0 | 0 | 0 | 0 | 0 | |
| 11:00 | 0 | 0 | 0 | 0 | 0 | 0 | 1 | 0 | |
| 11:30 | 0 | 0 | 0 | 0 | 0 | 0 | 0 | 0 | |
| 12:00 | 0 | 0 | 0 | 0 | 0 | 0 | 0 | 0 | |
| 12:30 | 0 | 0 | 0 | 0 | 0 | 0 | 0 | 0 | |
| 13:00 | 0 | 0 | 0 | 0 | 0 | 0 | 0 | 0 | |
| 13:30 | 0 | 0 | 0 | 0 | 0 | 0 | 0 | 0 | |
| 14:00 | 0 | 0 | 0 | 0 | 0 | 0 | 0 | 0 | |
| 14:30 | 0 | 0 | 0 | 0 | 0 | 0 | 0 | 0 | |

EP 4 016 337 A1

# FIG.16

START

S41
threshold ← 0
result ← EMPTY ARRAY

S42
$S_G$_List ← CALCULATE
$$S_G = \{i : a_{ij} > threshold \wedge x_j = 1, i \in G, j \in G' \neq G\}$$
FOR ALL G

S43
candidate_List ← REMOVE ELEMENTS CONTAINED
IN $S_G$ FROM $S_{all}$

S44
NUMBER OF
ELEMENTS IN candidate_List >
$N - N_{target}$ ?

YES

NO

S45
threshold ← threshold + 1
result ← $S_G$_List

END

32

Europäisches
Patentamt

European
Patent Office

Office européen
des brevets

# EUROPEAN SEARCH REPORT

Application Number

EP 21 20 6676

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DINH PHUC ET AL: "Joint Location and Beamforming Design for Cooperative UAVs With Limited Storage Capacity", IEEE TRANSACTIONS ON COMMUNICATIONS, IEEE SERVICE CENTER, PISCATAWAY, NJ. USA, vol. 67, no. 11, 1 November 2019 (2019-11-01), pages 8112-8123, XP011757242, ISSN: 0090-6778, DOI: 10.1109/TCOMM.2019.2936354 [retrieved on 2019-11-18] * sections II-V; figures 1,2; algorithm 1 * | 1-11 | INV. G06F17/11 |
| X | US 2015/205759 A1 (ISRAEL ROBERT [CA] ET AL) 23 July 2015 (2015-07-23) * paragraph [0013] – paragraph [0031] * * paragraph [0058] – paragraph [0134]; figures 3-9 * | 1-11 | |

TECHNICAL FIELDS
SEARCHED (IPC)

G06F

The present search report has been drawn up for all claims

| Place of search | Date of completion of the search | Examiner |
|---|---|---|
| Munich | 6 April 2022 | Spranger, Stephanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 6676

This annex lists the patent family members relating to the patent documents cited in the above-mentioned European search report.
The members are as contained in the European Patent Office EDP file on
The European Patent Office is in no way liable for these particulars which are merely given for the purpose of information.

06-04-2022

| Patent document cited in search report | Publication date | Patent family member(s) | Publication date |
|---|---|---|---|
| US 2015205759 A1 | 23-07-2015 | NONE | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020004387 A
- JP 2020064535 A
- JP 2020004384 A